# EUROPEAN PATENT SPECIFICATION

(11) **EP 1 463 588 B1**
(45) Date of publication and mention of the grant of the patent: **23.08.2006**
(21) Application number: 02805226.4
(22) Date of filing: 13.12.2002
(51) Int. Cl.: B05D 1/10

(54) **ARTICLES SPRAY COATED WITH NON-MELTING POLYMER**
MIT NICHTSCHMELZENDEM POLYMER SPRÜHBESCHICHTETE ARTIKEL
ARTICLES REVETUS PAR PULVERISATION AU MOYEN D'UN POLYMERE NON FUSIBLE

(30) Priority: 14.12.2001 US 340155 P
(43) Date of publication of application: 06.10.2004
(73) Proprietor: E.I. DU PONT DE NEMOURS AND COMPANY, Wilmington, Delaware 19898 (US)
(72) Inventor: FOLEY, Karin, E., State College, PA 16801 (US); MILLER, Edward, Newark, DE 19711 (US); RAYMOND, Arnold, W., Newark, DE 19702 (US); ROMANO, Eric, C., Wilmington, DE 19807 (US); SCHMECKPEPER, Mark, R., Kennett Square, PA 19348 (US); VAN RYPER, Richard, G., Wilmington, DE 19810 (US)
(74) Representative: Morf, Jan Stefan
(86) International application number: PCT/US2002/041669
(87) International publication number: WO 2003/051521

(56) References cited:
- EP-A- 0 532 134
- EP-A- 0 861 694
- WO-A-98/08614
- US-A- 4 999 225
- US-A- 5 285 967

## Description

### FIELD OF THE INVENTION

The present invention relates to coating surfaces using non-melting polymers. More particularly, the present invention relates to an article that is spray coated with at least one non-melting polymer preferably using a high velocity oxygen fuel (HVOF).

### BACKGROUND OF THE INVENTION

The following disclosures may be relevant to various aspects of the present invention and may be briefly summarized as follows:

High Velocity Oxygen Fuel (HVOF) processes have historically been used to spray coat metallic and ceramic materials. The spray coat process has used materials that are at least partially meltable or heat softenable such that they could be spray coated. For example, US Patent No. 5,285, 967 to Weidman discloses a high velocity, oxygen fuel (HVOF) thermal spray gun for spraying a melted powder composition of, for example, thermoplastic compounds, thermoplastic/metallic composites, or thermoplastic/ceramic composites onto a substrate to form a coating thereon. The gun includes an HVOF flame generator for providing an HVOF gas stream to a fluid cooled nozzle. A portion of the gas stream is diverted for preheating the powder, with the preheated powder being injected into the main gas stream at a downstream location within the nozzle. Forced air and vacuum sources are provided in a shroud circumscribing the nozzle for cooling the melted powder in flight before deposition onto the substrate.

Another example is US Patent No. 4, 999,225 to Rotolico which discloses a method for producing a dense and tenacious coating with a thermal spray gun including a nozzle member and a gas cap. This patent discloses powder particles having heat softenable, meltable component and a heat-stable, non-fusible component sprayed with a thermal process.

Non-melting polymers, such as polyimides, have been applied with successful results in semi-conductor applications that require resistance to corrosive plasma gas and high material purity. However, the method of application of these polymers has been limited to hot molding or directly forming parts with these polymer coatings in the semiconductor methods. There are instances where these methods are not practical. For example, for large and/or geometrically complex surfaces.

Thus, it is desirable to have an article that is spray coated with non-meltable polymers to provide the resistance and high material purity of the non-meltable polymer. Such coatings are also believed to extend the life of the substrate.

### SUMMARY OF THE INVENTION

Briefly stated, and in accordance with one aspect of the present invention, there is provided an article being spray coated with one or or more non-melting polymers, using a process comprising a high velocity oxygen fuel (HVOF) and spraying an HVOF stream containing at least one non-melting polymer from an elongated nozzle downstream from and in flow communication with said HVOF, said elongated nozzle comprising a cooling fluid, circulating externally around said barrel having a central bore with an inlet opening and an outlet opening, said at least one non-melting polymer being fed into said HVOF stream at a point within said elongated nozzle downstream from said inlet opening to coat said article with the at least one non-melting polymer.

### BRIEF DESCRIPTION OF THE DRAWINGS

The invention will be more fully understood from the following detailed description, taken in connection with the accompanying drawings, in which:
Figure 1 shows a prior art spray gun using high velocity oxygen fuel that identifies the components thereof.
Figure 2 shows an etching chamber.
Figure 3 shows a chart categorizing thermal spray processes.
Figure 4 shows a schematic of an HVOF thermal spray gun that can be used in the present invention.
Figure 5 shows a graphical comparison of scratch depth for steel, unfilled, unsintered vs. sintered.
Figure 6 shows a graphical comparison of scratch depth for steel, filled, unsintered vs. sintered.
Figure 7 shows a graphical comparison of scratch depth for steel, sintered, unfilled vs. filled.
Figure 8 shows a graphical comparison of scratch depth for steel, unsintered, unfilled vs. filled.
Figure 9 shows a graphical comparison of scratch depth for aluminum, filled, unsintered vs. sintered.
Figure 10 shows a graphical comparison of scratch depth for aluminum, unsintered, unfilled vs. filled.
Figure 11 shows a graphical comparison of scratch depth for unfilled, unsintered, steel vs aluminum.
Figure 12 shows a graphical comparison of scratch depth for filled, unsintered, steel vs aluminum.
Figure 13 shows a graphical comparison of scratch depth for filled, sintered, steel vs aluminum.
Figure 14 shows a bar graph depiction of wear test results for wear track area, steel, 10N, 0.65 m/s, 10000 cycles, averaged between 17 and 21 mm.
Figure 15 shows a bar graph depiction of wear test results for wear track area, steel, 20N, 0.65 m/s, 10000 cycles, averaged between 17 and 21 mm.
Figure 16 shows a bar graph depiction of wear test results for wear track area, aluminum, 10N, 0.65 m/s, 10000 cycles, averaged between 17 and 21 mm.
Figure 17 shows a bar graph depiction of wear test results for wear track area, aluminum, 20N, 0.65 m/s, 10000 cycles, averaged between 17 and 21 mm.
Figure 18 shows a bar graph depiction of wear test results for unsintered steel-Al, wear track area, 10N, 0.65 m/s, 10000 cycles, averaged between 17 and 21 mm.
Figure 19 shows a bar graph depiction of wear test results for unsintered steel-Al, wear track area, 20N, 0.65 m/s, 10000 cycles, averaged between 17 and 21 mm.
Figure 20 shows a bar graph depiction of wear test results for sintered steel-Al, wear track area, 10N, 0.65 m/s, 10000 cycles, averaged between 17 and 21 mm.
Figure 21 shows a bar graph depiction of wear test results for sintered steel-Al, wear track area, 20N, 0.65 m/s, 10000 cycles, averaged between 17 and 21 mm.
Figure 22 shows a bar graph depiction of wear test results for coefficient of friction, steel, 10N, 0.65 m/s, 10000 cycles, averaged between 17 and 21 mm.
Figure 23 shows a bar graph depiction of wear test results for coefficient of friction, steel, 20N, 0.65 m/s, 10000 cycles, averaged between 17 and 21 mm.
Figure 24 shows a bar graph depiction of wear test results for coefficient of friction, aluminum, 10N, 0.65 m/s, 10000 cycles, averaged between 17 and 21 mm.
Figure 25 shows a bar graph depiction of wear test results for coefficient of friction, aluminum, 20N, 0.65 m/s, 10000 cycles, averaged between 17 and 21 mm.
Figure 26 shows a bar graph depiction of wear test results for unsintered Steel-Al, coefficient of friction, 10N, 0.65 m/s, 10000 cycles, averaged between 17 and 21 mm.
Figure 27 shows a bar graph depiction of wear test results for unsintered Steel-Al, coefficient of friction, 20N, 0.65 m/s, 10000 cycles, averaged between 17 and 21 mm.
Figure 28 shows a bar graph depiction of wear test results for sintered Steel-Al, coefficient of friction, 10N, 0.65 m/s, 10000 cycles, averaged between 17 and 21 mm.
Figure 29 shows a bar graph depiction of wear test results for sintered Steel-Al, coefficient of friction, 20N, 0.65 m/s, 10000 cycles, averaged between 17 and 21 mm.

While the present invention will be described in connection with a preferred embodiment thereof, it will be understood that it is not intended to limit the invention to that embodiment. On the contrary, it is intended to cover all alternatives, modifications, and equivalents as may be included within the spirit and scope of the invention as defined by the appended claims.

### DETAILED DESCRIPTION OF THE INVENTION

A limitation of the prior art, as mentioned above, is the cost prohibitive element of bulk polyimide materials that contain the desired wear and friction and high temperature properties desired for a variety of applications. It is believed that this cost is reduced by using composites of polyimide and metal, where smaller amounts of the higher cost polyimide is used as the functional surface in combination with lower cost metals such as steel or aluminum for the bulk of the composite. A process for making these composites is the high velocity oxygen fuel process. Applications that require high material purity in addition to the resistance to wear and friction and the ability to be used in high temperature applications requires the application of non-meltable polymer as a coating to a substrate.

"Polyimides" for purpose of this application have linear macromolecules which include aromatic or heterocyclic rings that are tightly packed together and have the following characteristics of polyimides; high temperature resistance (-240 up to 370 C); high toughness and hardness; high thermostability; very good dimensional stability (coefficient of thermal expansion around 50µm/m/°K); very good wear performance; high radiation resistance; high flame retardation; and low outgassing in vacuum (less 10⁻¹⁰ g/cm²/s).

High performance parts made from polyimide resin include rotary seal rings, thrust washers and discs, bearings, printer platen bars and wire guides, wear strips, valve seats, check valve balls, thermal and electrical insulators. These are some of the variety of applications for polyimide parts. All of these parts exhibit a combination of properties which gives them advantages over metals, other plastics and ceramics. In comparison to metals, polyimide parts exhibit better sealing characteristics, lower weight, a lower coefficient of friction and improved resistance to corrosion. In comparison to other plastic materials, polyimide has a wider continuous-use temperature range, no melting or softening point and high creep resistance. Polyimide is compatible with oxygen, most fuels, solvents, lubricants and hydraulic fluids. In comparison to ceramics , polyimide parts seal better and are less brittle while still exhibiting dimensional and thermal stability.

Polyimide parts can replace parts made from conventional materials in many applications and can also enhance their performance. The low wear and self-lubricating characteristics make it possible to replace assembled parts by a directly formed piece. Examples are tape guides in VCRs and bearings in printers. The low coefficient of friction and the improved seal characteristics make it attractive and reasonable to use polyimide piston rings instead of steel ones.

As previously mentioned, a downside of replacement of common materials by polyimide parts is the higher costs of the polyimide bulk material. An alternative solution is to use composite components consisting of low cost metal substrates with high performance polymer surfaces that combine the superior properties of the polymer and limit the use of the bulk material in order to reduce costs.

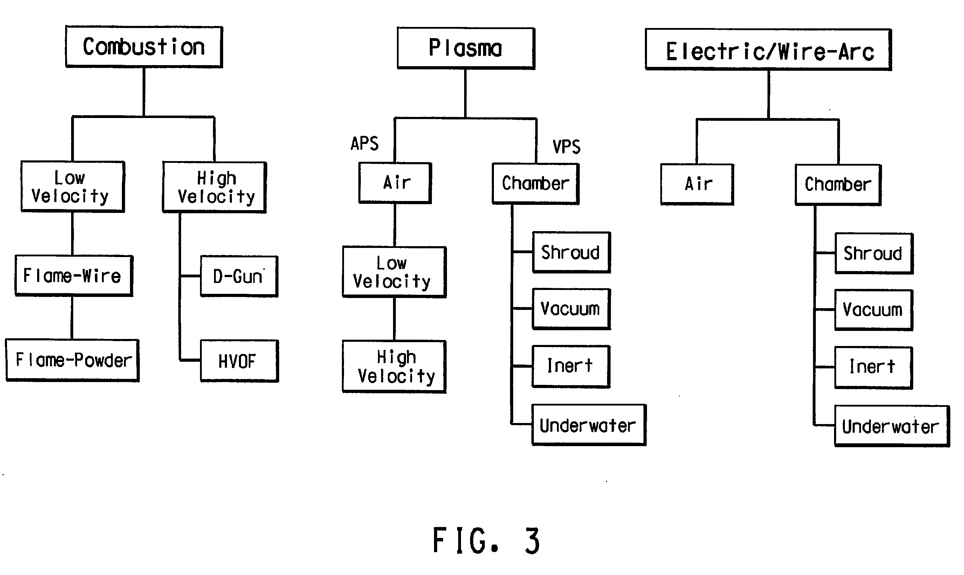

Thermal spraying is a versatile and sometimes cost effective solution for a variety of engineering and maintenance tasks. These include the production of corrosion and wear resistant coatings and repair of wom machinery parts.
The expression "thermal spraying" defines a group of processes that use chemical or electrical energy to deposit metallic and non-metallic material droplets onto substrates to form a coating. The combination of high temperatures producing particles either molten or at least softened and the high velocities cause the droplets to deform into thin "splats" on impact at the surface. As more and more particles impact, the droplets are rapidly built up and cooled into a lamellar structure which forms the coating. The deposits usually contain porosity, unmelted or incompletely melted particles and inclusions such as oxides, depending on the level of heating of the different particles. There are several different methods of thermal spraying which are differentiated by characteristics such as the energy source (combustion or electrical), the feed stock (particles or solid) and the surrounding environment. Typically three categories comprise the thermal spray processes: combustion spray, wire-arc and plasma as shown in Figure 3. (See R.W.Smith, R.Knight, Thermal Spraying I: "Powder Consolidation-From Coating to Forming" Journal of Materials, Vol. 47-8 (August, 1995), pages 32-39, which is hereby incorporated by reference.)

One of the processes in the combustion category is known as the High Velocity Oxy Fuel (HVOF) process, which was used working the present invention. The HVOF process is one of the newest and fastest growing of the thermal spray processes. The HVOF process can be used for a diverse range of applications such as jet aircraft, land based gas turbines, chemical reactors, metalworking forges, mills and rolls, textiles, bridges, pumps, compressors, medical prostheses and even household items like frying pans. The coatings provide protection against wear, corrosion, and thermal degradation and can also be used for refurbishment and maintenance.

The substrate material of the present invention may comprise an organic material or inorganic material. The inorganic material includes at least one material of metal and ceramics which are further described subsequently in the specification.

The polymer material of the substrate can be selected from the group of polyimide, polyamideimide, polyetherimide, epoxy, aramid , bismaleimide , phenol, furan , urea , unsaturated polyester , epoxy acrylate , diallyl phthalate , vinyl ester, melamine, nylon polymer, liquid aromatic polyamide polymer, polyester polymer, liquid aromatic polyester polymer, polypropylene polymer, polyether sulfone polymer, polyphenylene sulfide polymer, polyether ether ketone polymer, polysulfone polymer, polyvinyl chloride polymer, vinylon polymer, polybenzimidazole, aramid polymer, and fluoropolymer.

In addition to the polymer materials listed above, the polymer composites also contain at least one at least one reinforcement material comprising an organic reinforcement material and/or an inorganic reinforcement material. The reinforcement material includes at least one of particles, whiskers, chopped fibers, fibers, fabrics, and braids where the organic reinforcement material comprises carbon, aramid polymer, Poly(paraphenylene benzobisaxazole), Polyethylene terephthalate, Polyethylene naphthalate, fluoropolymer, and/or graphite and the inorganic reinforcement material comprises glass, clay, and/or mica.

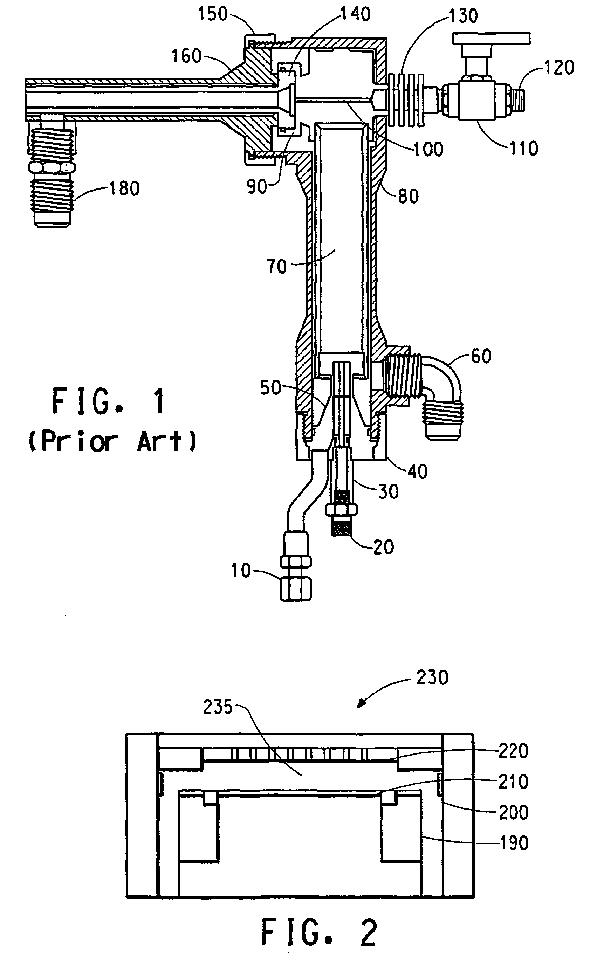

Reference is now made to the drawings for a detailed description of the present invention. Figure 1 shows a prior art view of a spray gun used to spray coat meltable or heat softenable polymers. The spray gun consists of a torch body 80 with service connections attached to the lower portion of the body by the lower retaining ring 40. Oxygen enters the gun through the oxygen inlet connection 10, passes through a flow stabilizer section 50, and into the combustion chamber 70. Fuel enters at the fuel inlet connection 20, passes through an injector 30 and is then mixed with the oxygen in the combustion chamber 70. The combusted gasses then travel into the combustion head 90, where they turn 90° and expand into the nozzle 140 which is supported by the nozzle holder 160 and attached to the gun by the upper retaining ring 150. The coating powder enters the gun through the powder inlet 120, passes through the powder valve 110, and through the powder valve adapter 130 which connects to the torch body 80. The powder then travels through the combustion head 90 through a carbide insert 100 which preheats the powder. The powder continues into the nozzle 140 where it is mixed with the combustion gasses, heated to the appropriate temperature above the melting point of the powder, and discharged onto the surface to be coated. External cooling is supplied by cooling water entering the gun at the cooling water inlet 180 which circulates around the nozzle 140, the combustion head 90 and the combustion chamber 70, then exits the gun at the cooling water exit 60.

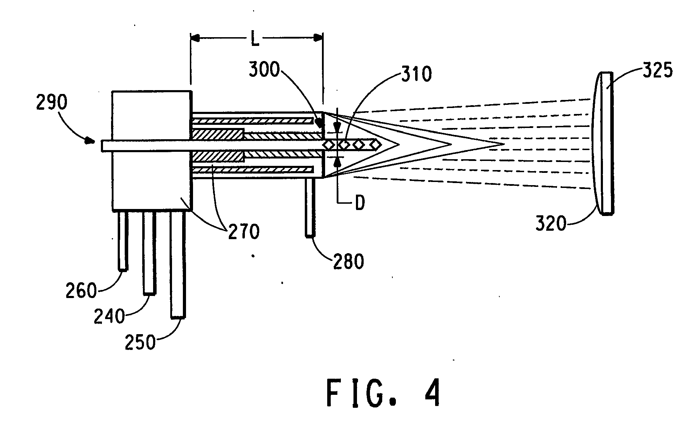

In the present invention, an embodiment of a process for spray coating non-melting polymers such as polyimides using high velocity oxygen fuel is disclosed in Figure 4. The thermal spray gun schematic shown in Figure 4 illustrates the basic HVOF features which include an intemal combustion chamber, active spray gun cooling, particle injection into a tube with the high pressure combustion gases and a supersonic nozzle expansion of the combustion gases. The design of the nozzle is not unlike that of a rocket motor. In the combustion chamber gases including oxygen in combination with fuels such as propylene, hydrogen, propane and even liquid fuels such as kerosene, are fed at high pressures (0.5-3.5 MPa) and high flow rates and combusted continuously. The resulting flame is allowed to expand supersonically and exit through a relatively long nozzle, which is indicated by the characteristic appearance of "shock diamonds". Powders with carrier gas are injected into the nozzle, where the particles are mixed with the high-pressure combusting gases. Because of the high back pressures it is necessary to use pressurized powder feeders with an inert carrier gas in order to convey powder into the jet. The particles are then subsequently heated and accelerated in the hot and expanding gas jet in order to achieve a sufficient splatting on impact to form coatings on the substrate.

An embodiment of the present invention shown in Figure 4 is more specifically described as follows. Oxygen enters the combustion chamber 270 through the oxygen inlet 240, where it mixes with fuel that has entered through the fuel inlet 250. The fuel and oxygen can be ignited in different areas of the spray gun, to sufficiently heat the non-melting polymer. In the case of present invention, combustion was performed in the horizontal portion of the spray gun. The combusted gasses then exit the gun at the nozzle exit 300. The non-melting polymer enters the gun at the powder injection inlet 290. The non-melting polymer travels through the combustion chamber 270 where it is preheated. The non-melting polymer is discharged into the combustion gas stream at the nozzle exit 300. Because the combustion gas flow is supersonic, shock diamonds 310 will be visible at the nozzle exit 300 as the non-meltable polymer is expelled from the nozzle in order to achieve a sufficient splatting on impact to form a coating 320 on the substrate 325. In the present invention it is preferable that the substrate be a smooth surface having less than or equal to 250 micrometers of roughness prior to spray coating. Roughening the substrate surface can be accomplished by various methods including media blasting. External cooling is required, and enters at the cooling water inlet 280. The cooling water circulates around the nozzle and combustion chamber and exits at the cooling water exit 260.

The chief differences between various HVOF systems are water vs. air cooling, axial or radial powder injection, fuel flows and composition, combustion chamber pressure and configuration, powder injection location and nozzle design and length. The cooling aspect has been found to be one of the essential elements. Most systems are water cooled in order to prevent melting and degradation of the nozzle and deposition of molten/softened powder on the nozzle walls. Also the high gas flow rates and the criticality of combustion fuel mixtures require precise gas flow control systems. Thus, the control of these parameters is essential for obtaining consistent deposit quality. The key HVOF components are: oxygen-fuel gas mixtures; powder injection; water or air cooling; nozzle cooling flow and control; and combustion gas injectors.

The Jet-Kote II® system manufactured by Stellite is another thermal spray process. In this design the fuel/oxygen mixture is combusted in the "handle" of the gun. The combusting gases are then turned through 90 degrees, split into four jets and the powder is injected into the center of this region. After a short pass through the nozzle the particle gas stream exits and expands to the atmosphere.

Typical gas velocities for HVOF spraying are 1370-2930 mls (4500-9600 ft/s), with particle velocities of 480-1020 m/s (1570-3350 ft/s) and jet temperatures range from 1650 to 2760 C (3000-5000 F). In comparison to other thermal spray processes, the HVOF process has both advantages and disadvantages. The advantages include lower capital costs, portability for easy use in the field, the usually high density and adherent coatings and reduced phase changes during spraying. The disadvantages include high noise levels (up to 130 dB(A), high operating costs due to high gas flows, and high heat inputs into the substrate and coating which may result in decomposition, residual stresses and cracking. However, the high operating costs are minimized when viewed in light of the process of the present invention leading to a less expensive end product.

Many thermoplastic polymers can be thermally sprayed which include urethanes, ethylenevinylalcohols (EVA's), polytetraflourethylene (PTFE), polymethylmetacrylate (PMMA), Polyetheretherketone (PEEK), nylon, polyethylene (PE) and others. The consolidation process of the polymers depends on sufficient in flight heating and acceleration in order to achieve full densities and cohesive strengths. It has also been found that the thermal spray process might decompose the meltable polymer, thus, lowering the molecular weight during spraying. For this reason, sprayed meltable polymers might have different properties compared to conventionally consolidated meltable polymers. The non-meltable polymer of the present invention is believed to avoid this decomposition problem of the meltable polymer.

Another embodiment of the present invention is for the article being spray coated with at least one non-melting polymer to be post-cured. The post-curing being the spray coating of at least one non-meltable polymer being sintered onto the article. Being sintered comprises heating at least one non-melting polymer spray coated onto said article, wherein the heating does not to exceed a maximum temperature of 450° C in an enclosure having an atmosphere devoid of oxygen.

Referring again to Figure 4, this embodiment of the present invention shows L (e.g length of the nozzle, preferably about 2" (50.8 mm) - 3" (76.2mm)) is decreased from the nozzle length of the prior art to reduce degradation of the flame expelled from the nozzle. Also, D (e.g. diameter of the nozzle, preferably about 3/16" (4.8mm) - 9/16" (14.3 mm)) in the present invention, was reduced (from that of the prior art) for higher exit velocity of the spray. These parameters assist in spray coating the substrate with non-melting polymers.

The following examples are embodiments of the present invention with the following developed spray system parameters:

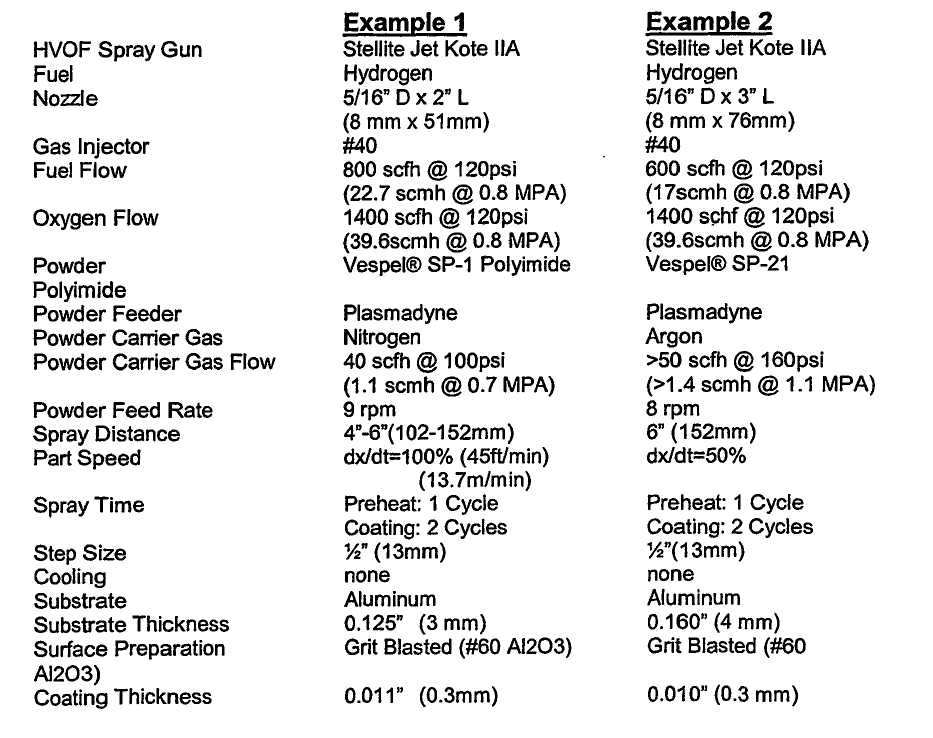

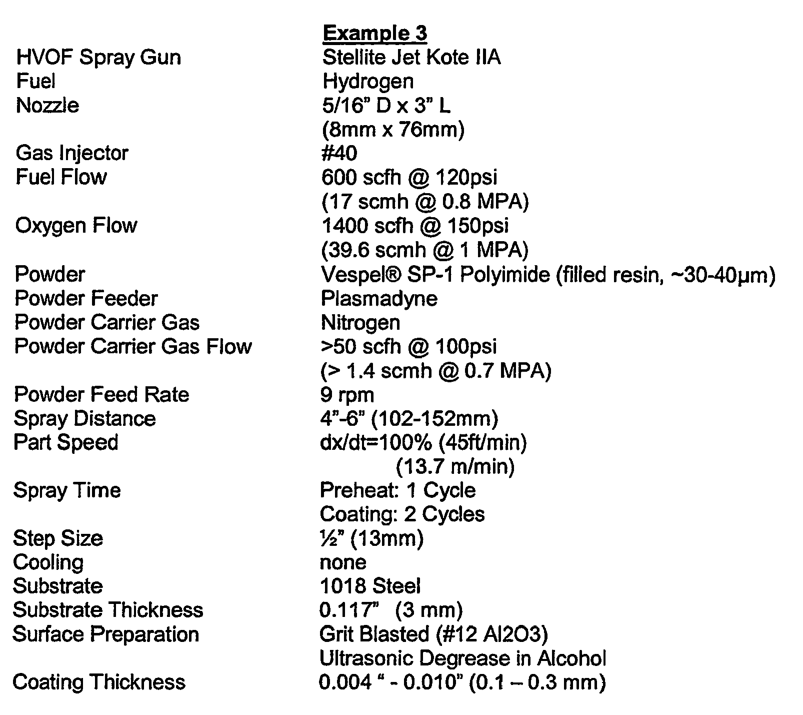

The non-meltable polymer coating is of considerable value as a coating in a corrosive environment such as inside a semiconductor etch chamber reactor 230 as shown in Figure 2. The etching chamber has upper and lower electrodes 210, 220 that are used to ionize the reaction gasses 235 creating a high energy plasma within the chamber. The etch chamber components are typically aluminum and need protection from the corrosive plasma gas environment therein. For example, the walls of the etching chamber such as the side walls of a wafer stage190 and the inside walls 200 as shown in Figure 2. While aluminum is typically used in an etch chamber, other metals that can be used in the process of the present invention include steel, aluminum, copper, titanium, bronze, gold, lead, nickel, tungsten, silver, and metal alloys. The present invention can be used on ceramics as well as metals to protect the spray coated ceramics (or metal) from a corrosive environment. The ceramics include: silicon dioxide, aluminum dioxide, yttrium oxide, chrome oxide, chrome carbide, tungsten carbide, tungsten carbide-cobalt, zirconium oxide, zirconium oxide-yttrium oxide, alumina/titania composites, chrome carbide-Nickel-Chrome, and silicon carbide.

The non-meltable polymer coatings protect the metal and ceramic parts in the corrosive environment and have high purity as mentioned above. Examples of such non-meltable polymer coatings for such protection include: polyphenylenes, polyether sulfones, polyphenylene sulfides, polyimidothioethers, polyoxamides, polyimines, polysulfonamides, polyimides, polysulfonimides, polyimidines, polypyrazoles, polyisoxazoles, polybenzoxazoles, polybenzimidazoles, polythiazoles, polybenzothiazoles, polyoxadiazoles, polytriazoles, polytriazolines, polytetrazoles, polyquinolines, polyanthrazolines, polypyrazines, polyquinoxalines, polyquinoxalones, polyquinazolones, polytriazines, polytetrazines, polythiazones, polypyrrones, polyphenanthrolines, polycarbosilanes, and polysiloxanes.

The tests run and the results obtained using the thermal spray coating method for non-meltable polymer are described in the following Examples section.

### EXAMPLES:

The following experiment was run: Initially, the powder compositions were characterized through their characteristic values and morphology examined by optical microscopy. After that, parameters to obtain coatings without significant degradation of the polymer were developed. A sample preparation procedure for the actual spray cycles followed. The coatings were characterized through their microstructure and porosity using standard metallographic techniques. Tests to determine the coating cohesion, adhesion and wear performance included Tape Test, Pencil Test, Scratch Test and Wear Test with a Pin-on-Disc (POD) Wear Tester. These tests and the data attained will be discussed later in the text.

Two polyimide powders were used, an unfilled base resin (Vespel® SP-1 manufactured by DuPont) and a graphite filled resin (Vespel® SP-21 manufactured by DuPont). Table 1 discloses characteristic values for the unfilled resin (Vespel® SP-1) and the filled resin (Vespel® SP-21).

**Table 1. Characteristic values for test resins**

| Characteristics | Unfilled Resin | Filled Resin |
|---|---|---|
| Specific Gravity | 1.34-1.43 | 1.42-1.51 |
| Thermal conductivity [W/m K] | 0.29-0.39 | 0.46-0.87 |
| Coefficient of Linear Expansion [µm/mK] | 50-54 | 41-49 |
| Melting Point | None | None |
| Filler | None | 15% graphite |
| Particle Size | 20-30µm | 20-30µm |

The quality of a coating on a substrate is dependent mainly on the temperature and the velocity of the particles prior to the impact with the substrate. These two parameters are influenced by several variables of the HVOF process. The fuel to oxygen ratio flow determines the temperature of the flame. The velocity of the particles is influenced by a higher amount of combusted gas due to flow rates and pressures of the oxygen and fuel. Thus, velocity will be increased by a higher pressure in the nozzle.

The samples that were prepared for the different types of tests were 1 x 3 coupons (0.12" (3.1 mm) thick) and wear discs with a diameter of 2.4 "(60 mm). Prior to spraying they were grit blasted to enhance the bonding between substrate and coating. The substrate materials were 1040 steel and aluminum and the coating materials were the unfilled and the 15% graphite filled polyimide. Samples with all substrates and all coatings were sintered according to the following method: The parts were placed in an oven at a temperature below 140°C. The oven was purged with nitrogen at a flow rate of 4 scfm until the oxygen level reached less than 0.2%. The temperature was ramped up from 140 to 400°C at a maximum rate of 90K per hour. The ramping was stopped when the temperature was in the range of 395 to 400°C. The temperature of 395 to 400°C was held for approximately three hours +/-10 minutes. The oven was turned off and the parts were removed when the temperature reached 50°C. Thus, eight different substrate/coating/post-deposition treatment combinations were studied. Each of the combinations was tested with different test methods and the effects of different substrates, filler and sintering on the properties of the coating for evaluation of the coating.

**Table 2: Substrate/Coating/ Post-Deposition Treatment**

| Substrate Material | Coating Material | Sinter State |
|---|---|---|
| Steel | Unfilled (SP-1) | unsintered |
| Steel | Unfilled (SP-1) | sintered |
| Steel | Filled (SP-21) | unsintered |
| Steel | Filled (SP-21) | sintered |
| Aluminum | Unfilled (SP-1) | unsintered |
| Aluminum | Unfilled (SP-1) | sintered |
| Aluminum | Filled (SP-21) | unsintered |
| Aluminum | Filled (SP-21) | sintered |

### Tape Test:

A Tape Test was used to measure adhesion of the coatings. The average thickness of the samples was over 125 µm (0.005"), thus, test method A in accordance with ASTM D3359-95 (from "Standard Test Methods for Measuring Adhesion by Tape Test", Publication of the American Society for Testing and Materials, Philadelphia, April 1995) was used. An X-cut is made in the film to the substrate, pressure-sensitive tape is applied over the cut and then removed, and the adhesion is assessed qualitatively on the following 0 to 5 scale:
- 5A: No peeling or removal;
- 4A: Trace peeling or removal along incisions or their intersection;
- 3A: Jagged removal along incisions up to 1.6 mm (1/16 inch) on either side;
- 2A: Jagged removal along incisions up to 3.2 mm (1/8 inch) on either side;
- 1A: Removal from most of the area of the X under the tape; and
- 0A: Removal beyond the area of the X.
The test was made using 3M Scotch 600 tape, 25.4 mm (1 inch) in width. The results of the Tape Test are shown in Table 3.

**Table 3: Results of Tape Test**

| **Sample** | **Tape Test** |
|---|---|
| Steel, unfilled, unsintered | 4A |
| Steel, unfilled, sintered | 5A |
| Steel, filled, unsintered | 4A-5A |
| Steel, filled, sintered | 5A |
| Aluminum, unfilled, unsintered | 5A |
| Aluminum, filled, sintered | 5A |
| Aluminum, filled, unsintered | 4A-5A |
| Aluminum, filled, sintered | 5A |

The trend seen from this table is that the sintering process enhanced the adhesion of the coating to the substrate and also enhanced the cohesion within the coating. Influences of the substrate material or the filler were not apparent in this test.

### Pencil Test:

A Pencil Test allows a relative comparison of samples and does not give an absolute value of coating hardness. The Pencil Test should be performed as follows according to ASTM D3363-92a, (from "Standard Test Methods for Film Hardness by Pencil Test", Publication of the American Society for Testing and Materials, January 1993): A coated panel is placed on a firm horizontal surface. The pencil is held firmly against the film at a 45 degree angle (point away from the operator) and pushed away from the operator in a 6.5 mm (1/4 inch) stroke. The process is started with the hardest pencil and continued down the scale of hardness to wither one of tow end points: one, the pencil that will not cut into or gouge the film (pencil hardness), or two, the pencil, that will not scratch the film (scratch hardness). In this case the pencil hardness was tested. The pencils that are used for this test meet the following scale of hardness: 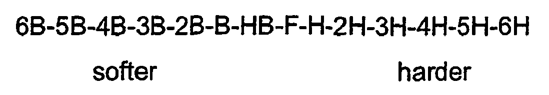 The results of the pencil tests of the present invention are summarized in Table 4 using the above scale of hardness.

**Table 4: Results of Pencil Test**

| **Sample** | **Tape Test** |
|---|---|
| Steel, unfilled, unsintered | F |
| Steel, unfilled, sintered | HB |
| Steel, filled, unsintered | H |
| Steel, filled, sintered | H-2H |
| Aluminum, unfilled, unsintered | F |
| Aluminum, unfilled, sintered | F |
| Aluminum, filled, unsintered | F |
| Aluminum, filled, sintered | H-F |

In Table 4, in the case of the unfilled material, the substrate and the sinter process appear to have virtually no effect on the hardness (e.g. for steel the hardness slightly decreased and for aluminum the hardness stayed at F). In the case of the filled material the test showed that the sintering process enhanced the coating hardness, which was improved approximately by ½ point on the hardness scale. On the steel substrate, the filled material showed a higher pencil hardness than the unfilled one. The pencil hardness was higher for the filled material on the steel substrate than on the aluminum substrate, in both the unsintered and sintered case.

The Pencil Test results can be strongly operator dependent, despite the fact that coatings with different characteristics showed different pencil hardness. Thus, it is important to test the samples under the same conditions, particularly with regard to pencil sharpness, force and angle.

### Scratch Test:

The Scratch Test can be performed on an apparatus that uses a simple device which applies a fixed load on a sharpened needle which is dragged over a surface of a coating. The resulting scratch depth is measured using a stylus-tracing profilometer and compared to scratches with the same load in different coatings. Scratch Testing is an easy method of investigating the cohesion of a coating. In order to reduce errors in the profilometer reading the surfaces of the samples were polished with dry abrasive paper. In order to provide a sufficient thickness for the test the polishing had to be done carefully to ensure that the coating was at least 190 µm thick after polishing. It was also important to ensure that the surface was smooth enough to enable a proper profilometer reading. The range of the load for the scratch test was from 500g to 2000g in steps of 250g.

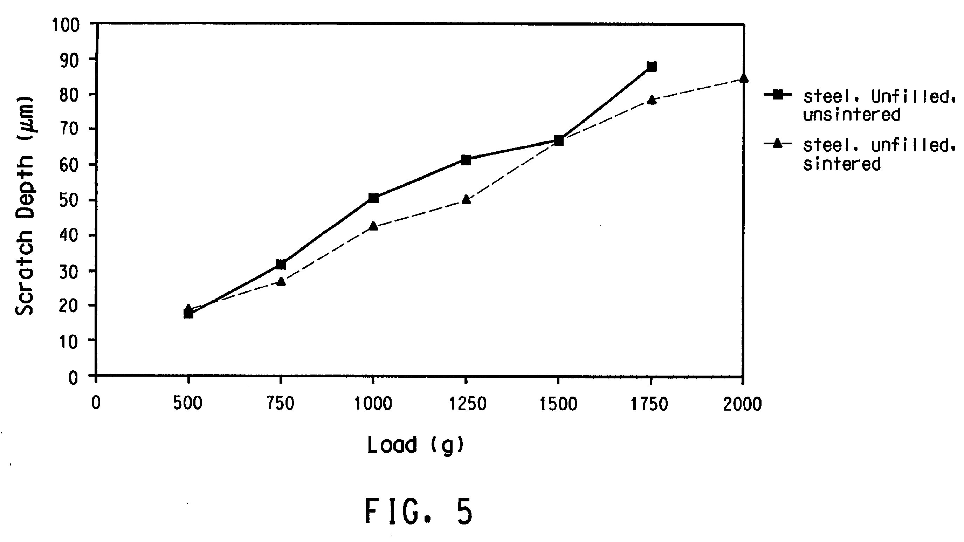

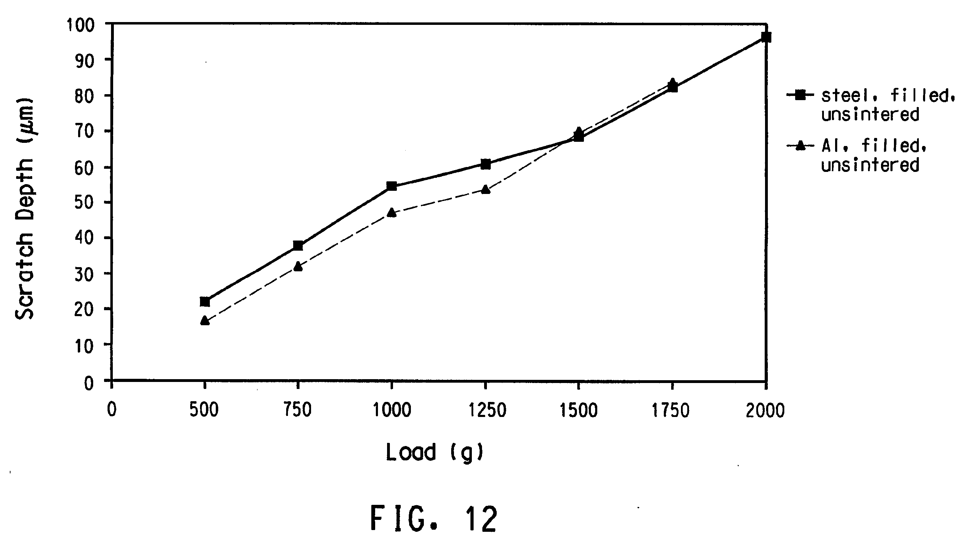

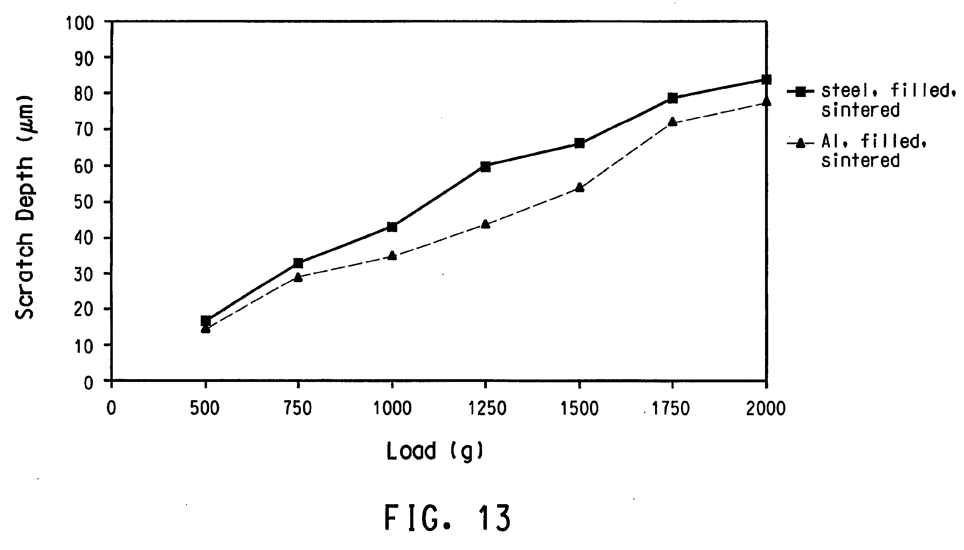

The results of the scratch tests in the present invention are shown in the graphs shown in Figures 5-13. Each graph is representative of the properties of the sample tested (e.g. Figure 5, Steel, filled, unsintered vs sintered,....) In some cases the load of 2000g produced such a deep scratch that it was out of the range of the profilometer. In that case the value for the 2000g scratch depth is beyond the range shown in the Figures. Each scratch depth was the mean of four measurements with the profilometer.

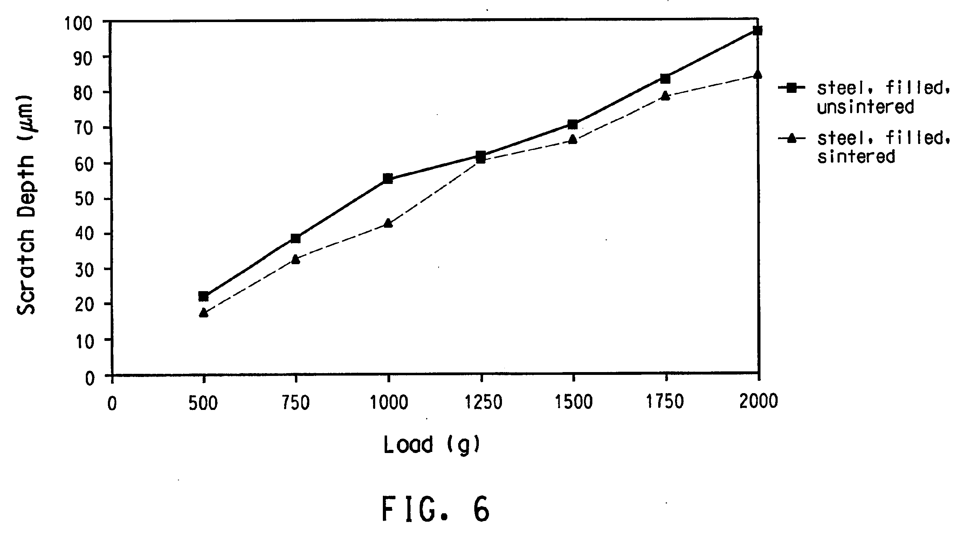

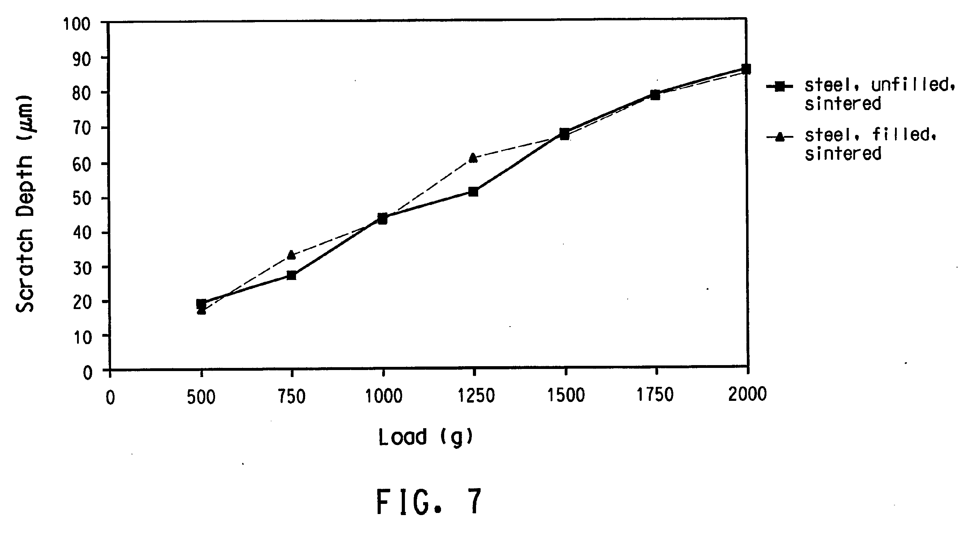

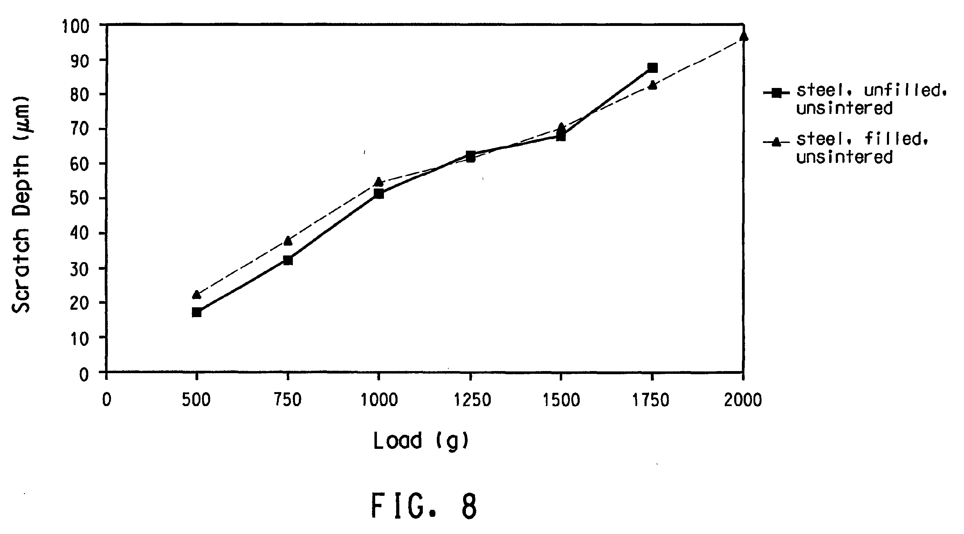

Figures 5 and 6 show the scratch test results for unfilled and filled material on steel. The sintering process increased the coating density and enhanced its cohesion resulting in a higher scratch resistance. The scratch depth for the sintered case was lower by 6 µm on average. Figures 7 and 8 compare unfilled vs. filled material on steel. With some slight deviation the filler showed no influence on the scratch resistance. Despite the fact that the scratch resistance depends on the amount of molecular bonds the expected bond reducing effect of a filler could not be noticed.

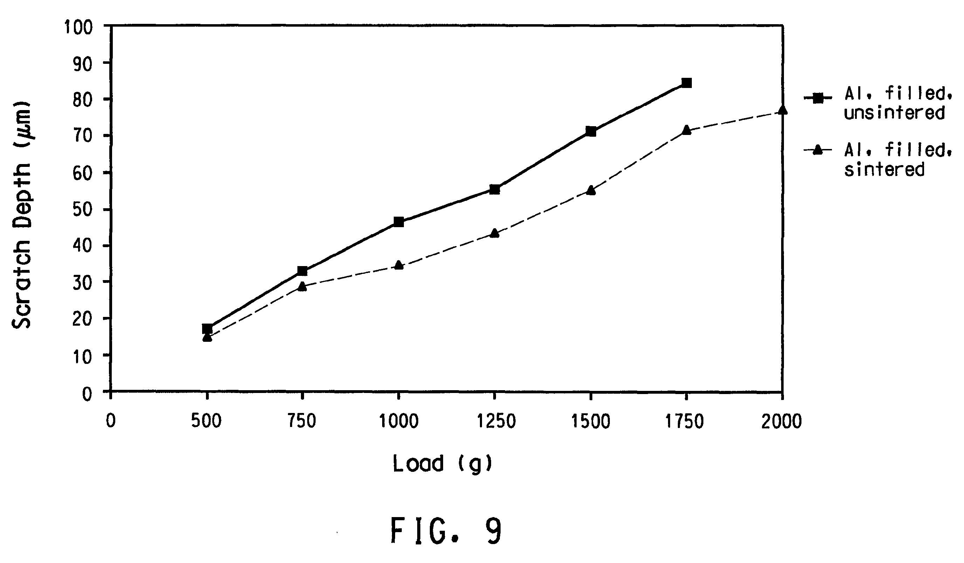

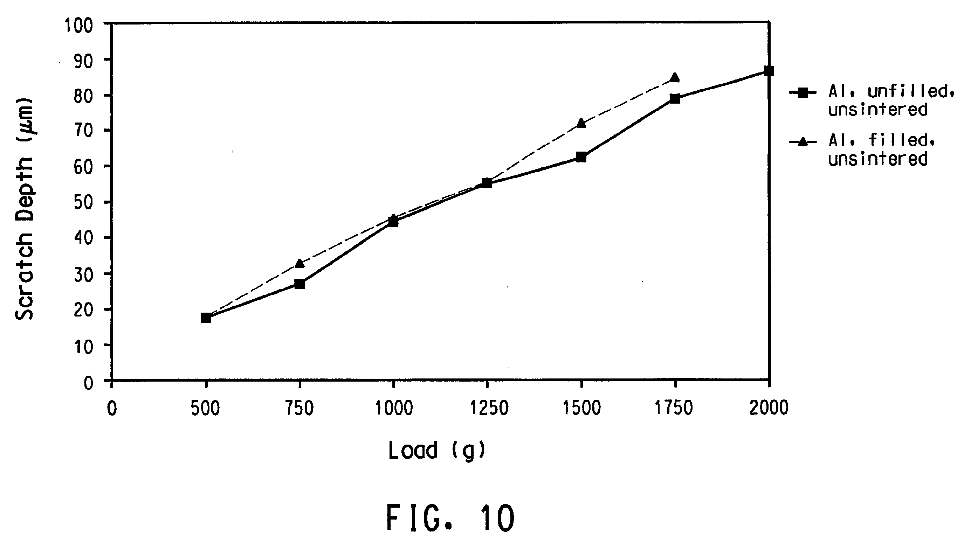

The results for the scratch test of the combination Aluminum, unfilled, sintered were not available. Figure 9 shows clearly the scratch resistance enhancing effect of the sinter process for the filled material on aluminum substrate. The scratch depth is lower by 9 µm on average. Figure 10 compares unfilled vs. filled material in the unsintered state on aluminum substrate. Similar to the results of the steel substrate the filled and unfilled material showed equal scratch resistance within an experimental deviation range.

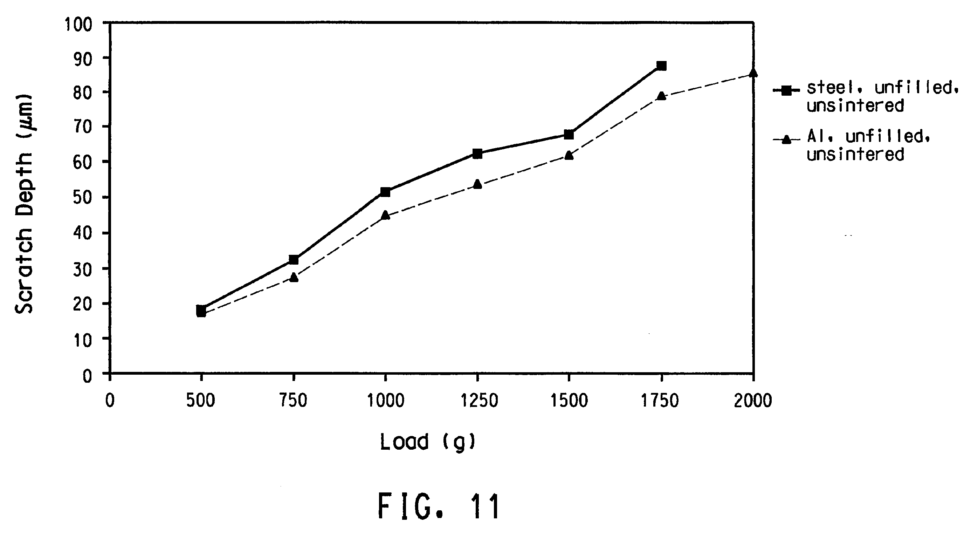

Figures 11 through 13 compare the scratch resistance on steel and aluminum substrate. It was noted that the scratch resistance was higher for the aluminum substrate then for the steel substrate. The scratch resistance for the aluminum samples was higher then the steel samples regardless of sintering or unsintering.

For both substrates and for unfilled and filled material the diagrams show clearly the influence of sintering. The sintered material showed a lower scratch depth independent from substrate and filler. The sinter process obviously made the coating more dense and enhanced its cohesion by increasing the amount of bonds resulting in a higher scratch resistance.

### Wear Test:

In a POD (pin-on-disc) wear tester, the wear disc with the coating is fastened with a screw to a rotating disc, which is turned by the motor of the wear tester. The pin with the steel ball applies the test load onto the wear disc and can be moved to both sides in order to change the wear track radius. According to this wear track radius the rotations per minute of the rotating disc had to be changed in order to achieve the same sliding speed. The pin also contained the sensors to measure the forces during wear testing and was connected to the control computer.

Wear testing was carried out using a pin-on-disc tribometer according to ASTM G 99-90 standards. The counterbody was a 10 mm diameter 52100steel ball in all cases. The sliding speed was kept constant at 0.65m/s. Two tracks were tested on each disc at radii of 17 and 21 mm. In order to keep the sliding speed constant, the RPM of the disc was varied accordingly. The duration of the test was 10000 cycles and the interfacial medium between the coating and the steel ball was air. For each of the eight conditions two discs were available, of which one was tested on two tracks at a load of 10N and the second one at a load of 20N. The discs were first polished with dry abrasive paper in order to reduce the noise in the profilometer reading. Another problem that occurred was the "wavy" profile of the wear discs due to the different passes during spraying. The following parameters were recorded during the sliding wear tests: a)the wear track cross-sectional area was measured as an average of four measurements using the profilometer and the integrals under the resulting profiles were calculated by a computer; and b) the coefficient of friction was recorded from the tribometer using a data acquisition system. (The coefficient of friction was averaged over a useful period of rotations (6000-8000 cycles on average), i.e. run-in-effects up to the first 2000 rotations were not considered. Also sudden steps in the friction curves were averaged over a useful period of rotations.)

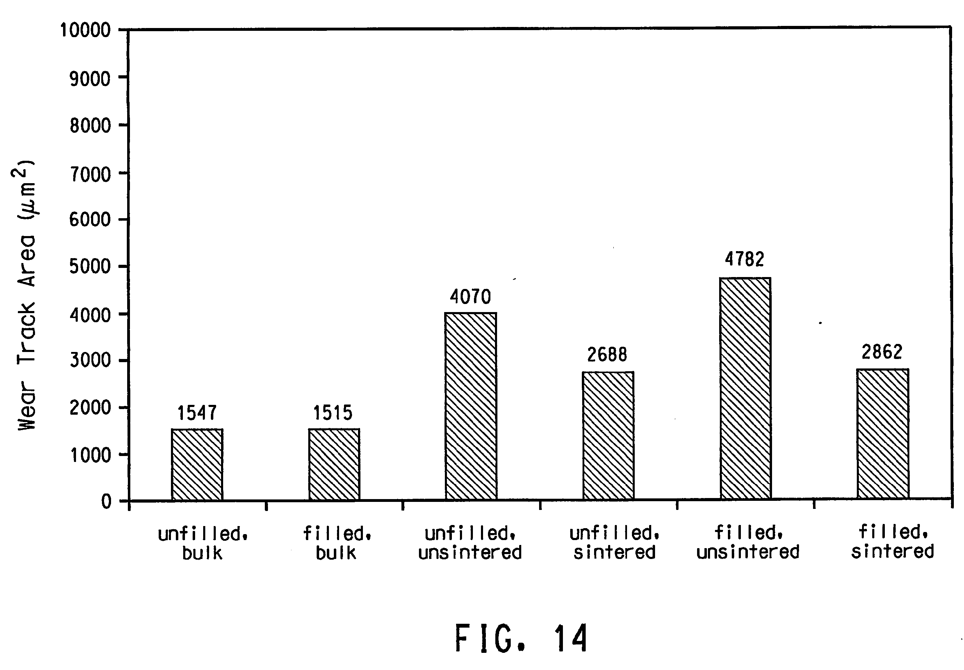

For comparison purposes, wear testing was also performed on samples made of conventionally produced polyimide parts. The polyimide used was Vespel® SP-1 manufactured by DuPont for the unfilled sample, and Vespel® SP-21 manufactured by DuPont for the 15% graphite filled samples. As expected, these samples performed better than the coated samples as shown in figures 14 - 29. However, because they are made completely of polyimide, they are significantly more expensive than the coated samples made of an inexpensive metal substrate and thin polyimide coating. The coated samples exhibit desirable characteristics of the polyimide, at a much lower total cost.

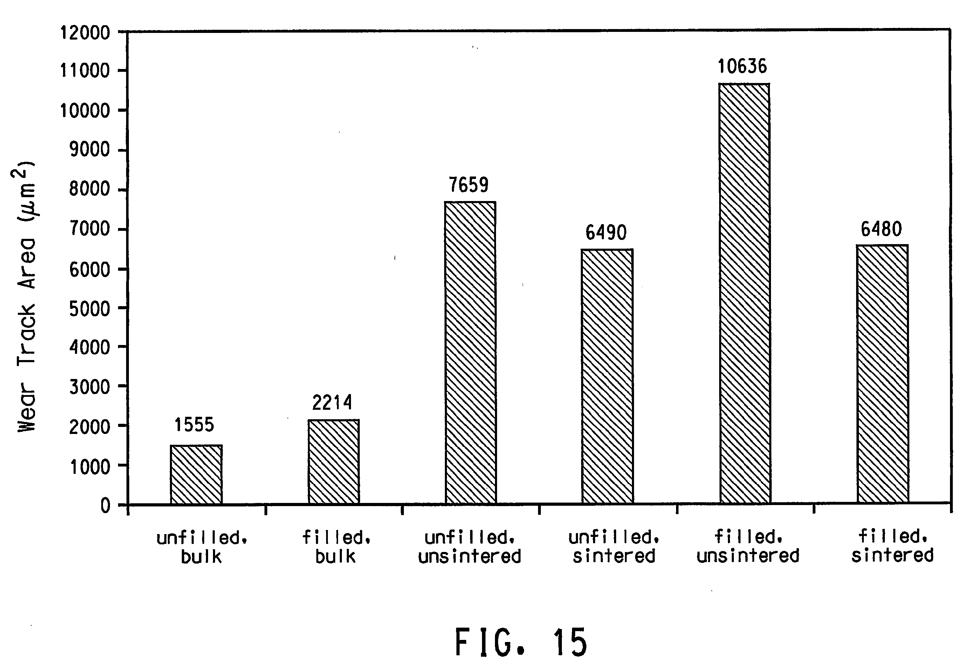

One of the discs with the configuration Al, filled, unsintered, which was supposed to be tested with a 20 N load, had a very thin coating. Because of that the coating wore through during the test and no values for wear track area and width could be determined. Since the coating wore away after about 8000 cycles, the values for the coefficient of friction could still be used. All of the following results were the average of the results for the 17 and 21 mm radius tracks. Figures 14 and 15 show the results for 10 and 20 N on a steel substrate. The coatings sprayed from the filled material exhibited a higher wear rate (10N: 4782 µm², 20N:10636 µm²) than the ones from the unfilled material (10N: 4070 µm², 20N:7659 µm²). In the sintered state there was no apparent difference between unfilled and filled material. This is believed to be the result of the sintering process increasing the density and equalizing the difference between filled and unfilled material.

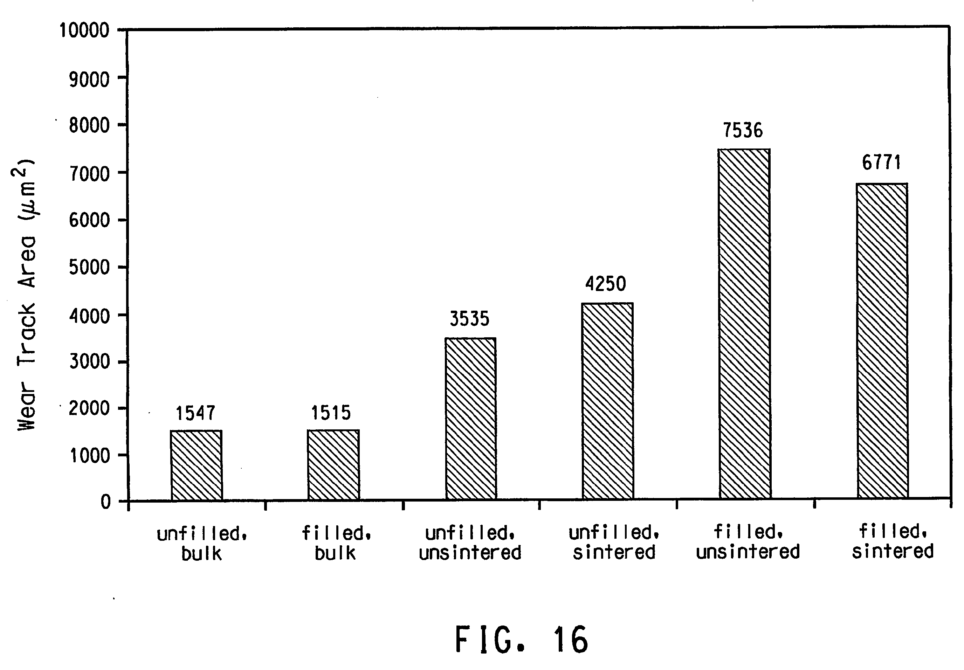

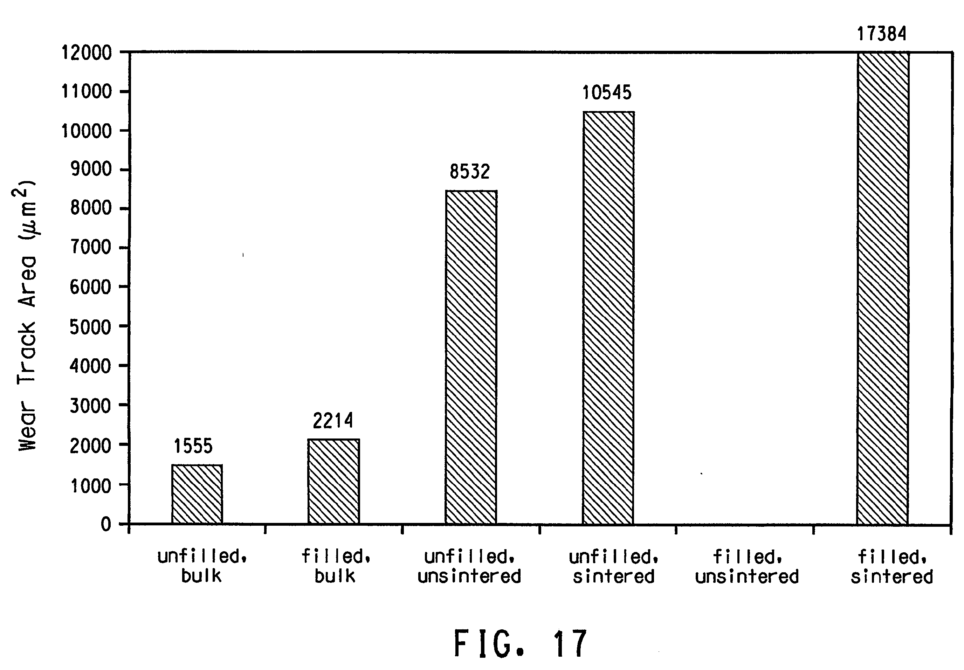

Figures 16 and 17 show the results for coatings on aluminum substrates. In the unsintered and sintered state the filled material exhibited a higher wear track area (10N: 7536 µm² unsintered, 6771 µm² sintered) than the unfilled one (10N:3535 µm² unsintered, 4250 µm² sintered). Contrary to the case of steel substrate, sintering appeared to only enhance the properties of the filled material but did not equalize the difference between filled and unfilled material. On aluminum substrate the unfilled, sintered coatings showed still higher wear than the unsintered ones.

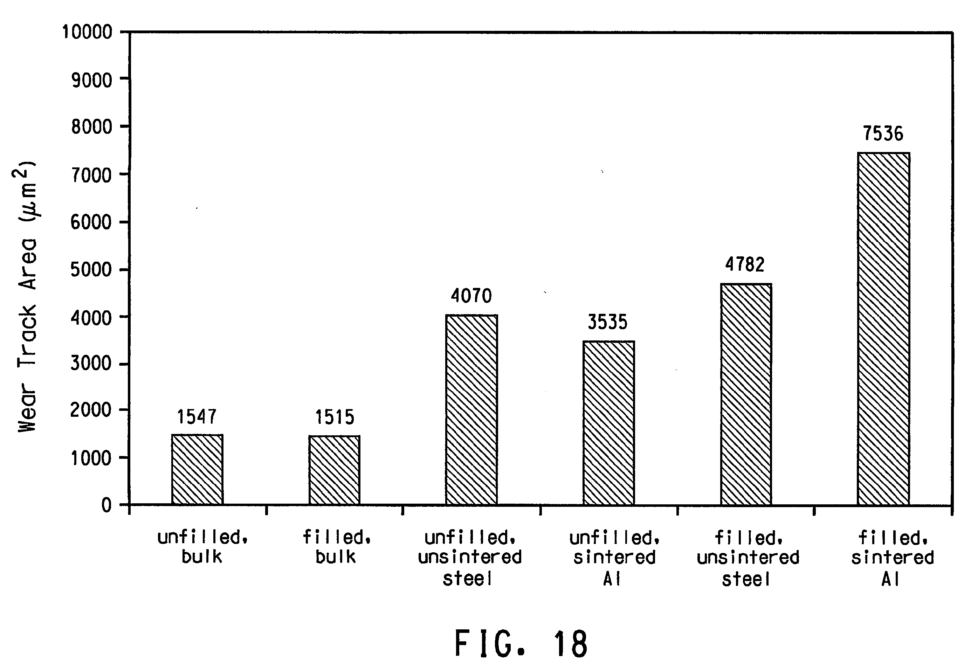

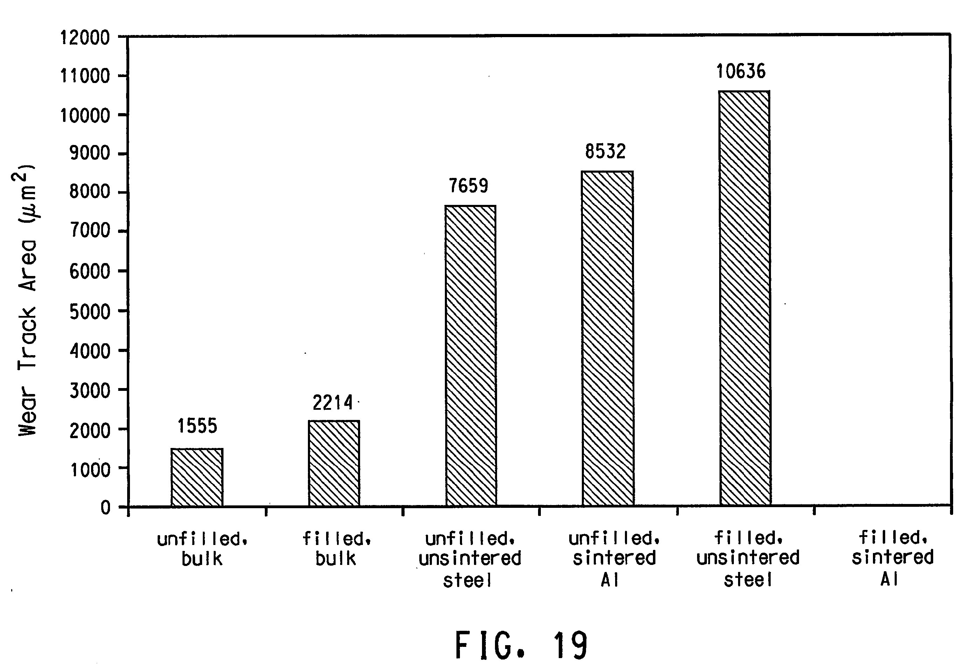

Figures 18 and 19 show the results for unsintered coatings on steel and aluminum substrates. While comparing the results for 10 and 20N in the unfilled case it appeared that at different times the steel and the aluminum substrate exhibited higher wear. According to the mechanism, where coatings on aluminum should exhibit less resistance, the difference in the filled case between steel and aluminum was much more significant. (steel: 4782 µm² to aluminum: 7536 µm²). The lower density of the coatings sprayed onto aluminum substrates, which resulted in a higher wear rate, are believed to have been due to a combination of factors. These factors include less cohesion within the coating due to increased heat transfer to the substrate, lower density during spraying and sintering and variations in the degree of cross-linking.

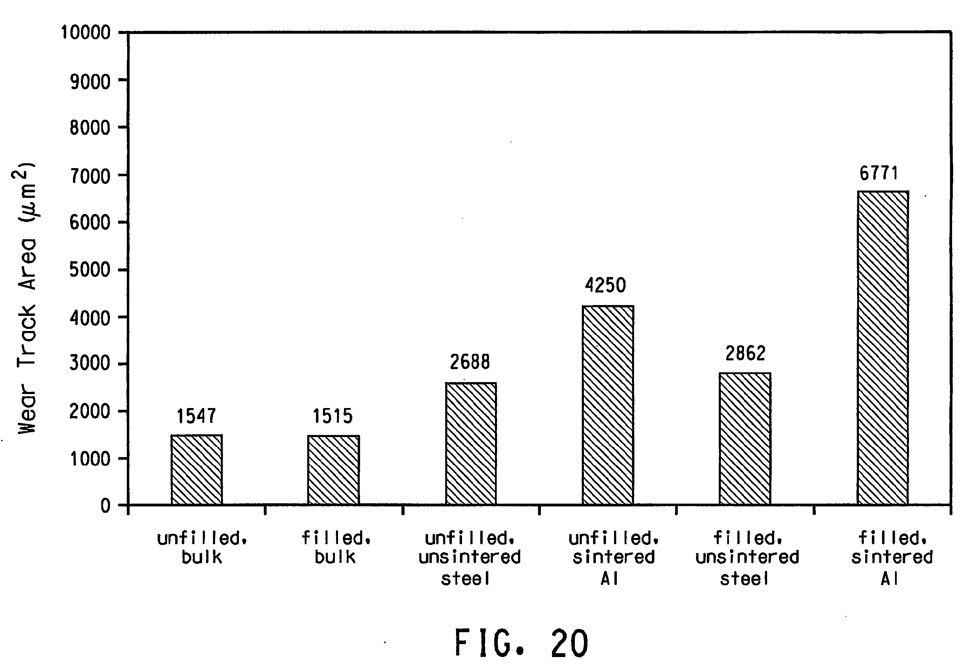

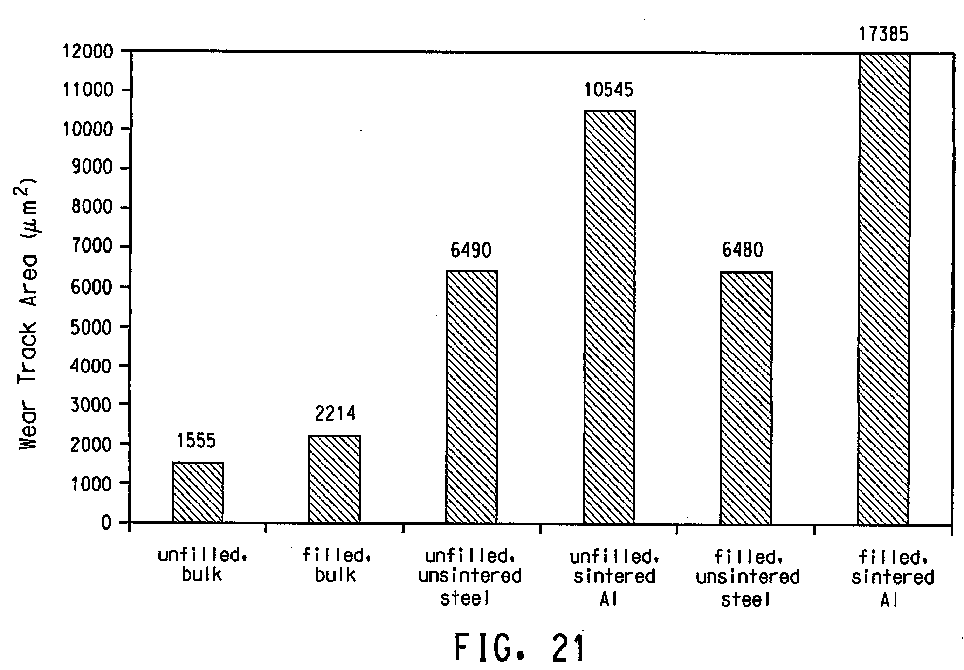

Figures 20 and 21 compare sintered coatings on steel and aluminum substrates. It was believed that the sinter process would equalize the different grades of densification between steel and aluminum, however, a surprising result was shown by the experiment. The coatings on aluminum substrate still showed much higher wear rates than those on steel for filled and unfilled material. The sinter process seemed only to equalize the difference in wear performance between unfilled and filled material on steel. It could not level out the difference between coatings on steel and aluminum substrates. This is believed to be the result of higher thermal conductivity of aluminum with its effects on cohesion and stress condition during sintering. These results indicate that coating properties are dependent upon the properties of the substrate. Optimization of desired friction and wear properties, as well as overall cost can be accomplished by selecting the proper substrate in combination with a filled or unfilled non-melting polymer.

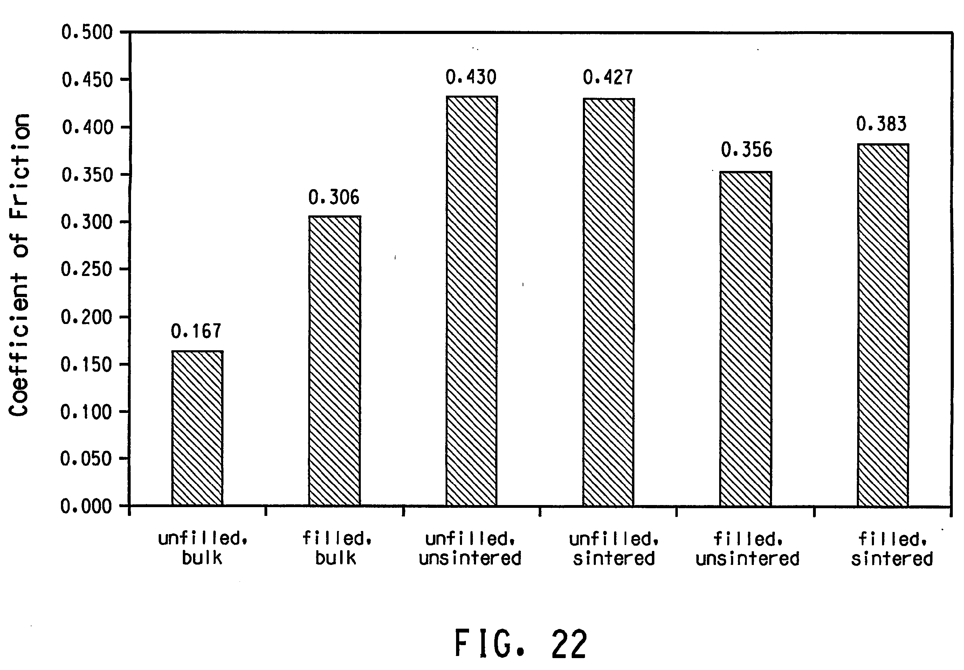

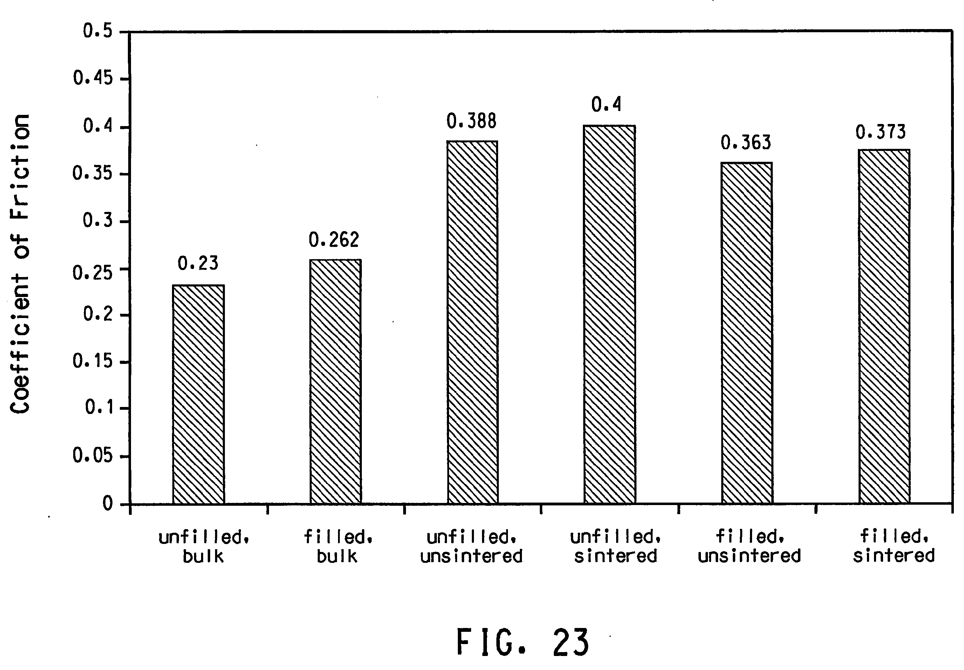

Figures 22 and 23 compare the coefficient of friction (COF) for unfilled and filled material on steel. The coatings sprayed from the filled substrate material showed a lower COF (0.366 on average) than the unfilled ones (0.411 on average). For the unfilled material the sinter process seemed to have virtually no influence in terms of increasing the coefficient of friction by increasing the density. In terms of the filled material there was also virtually no difference between sintered and unsintered state over the range of experimental variation.

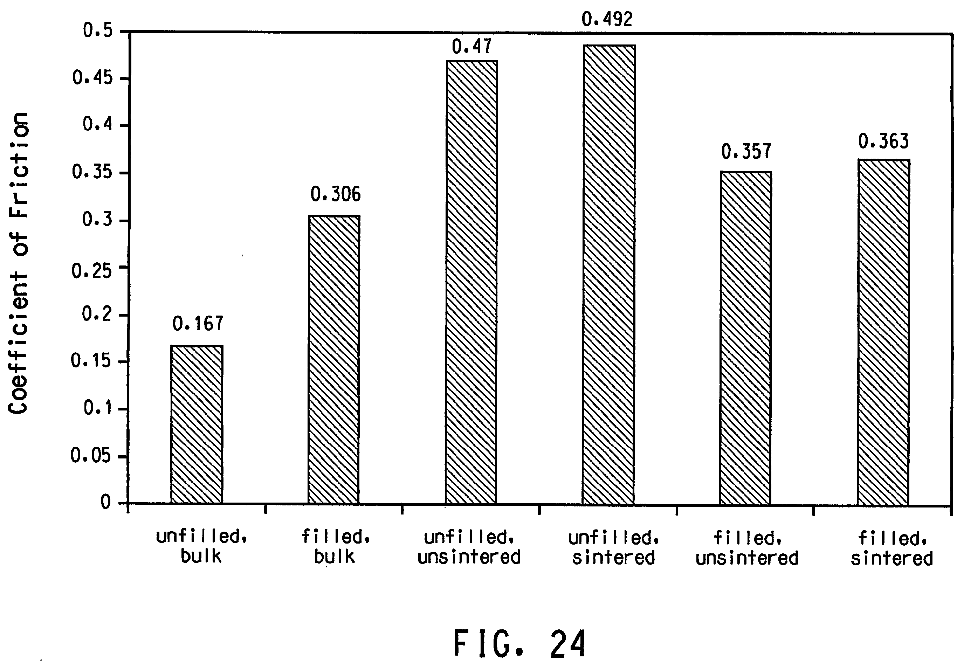

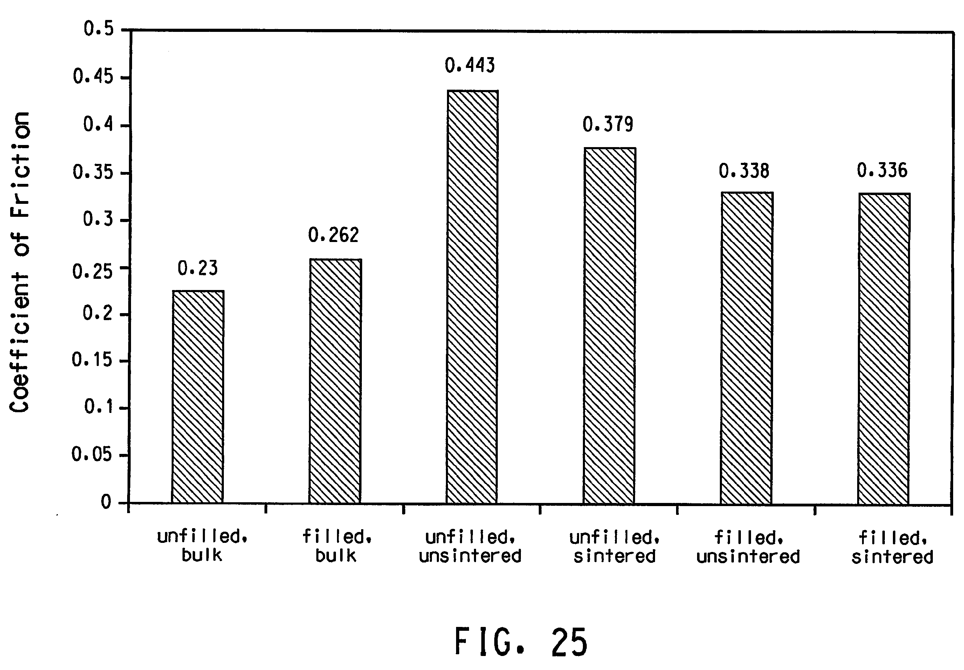

Figures 24 and 25 show the coefficient of friction for coatings sprayed onto aluminum substrates. As expected the filled material showed a lower COF (0.363) than the unfilled one (0.463). In terms of the unfilled material the trend was difficult to determine since the results varied greatly for loads of 10 and 20N, however, the filled material again showed no influence of sintering.

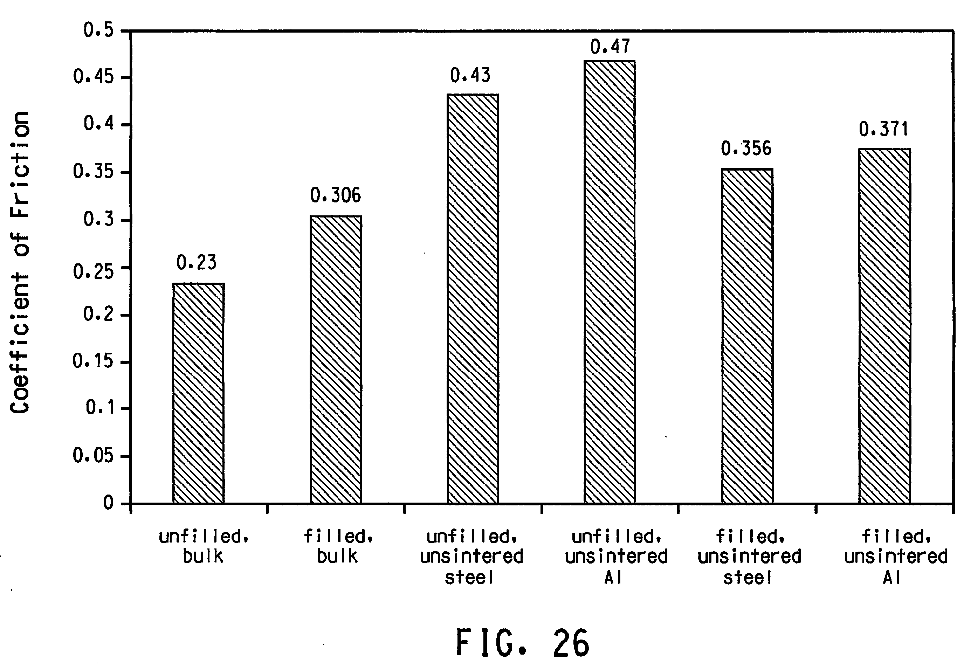

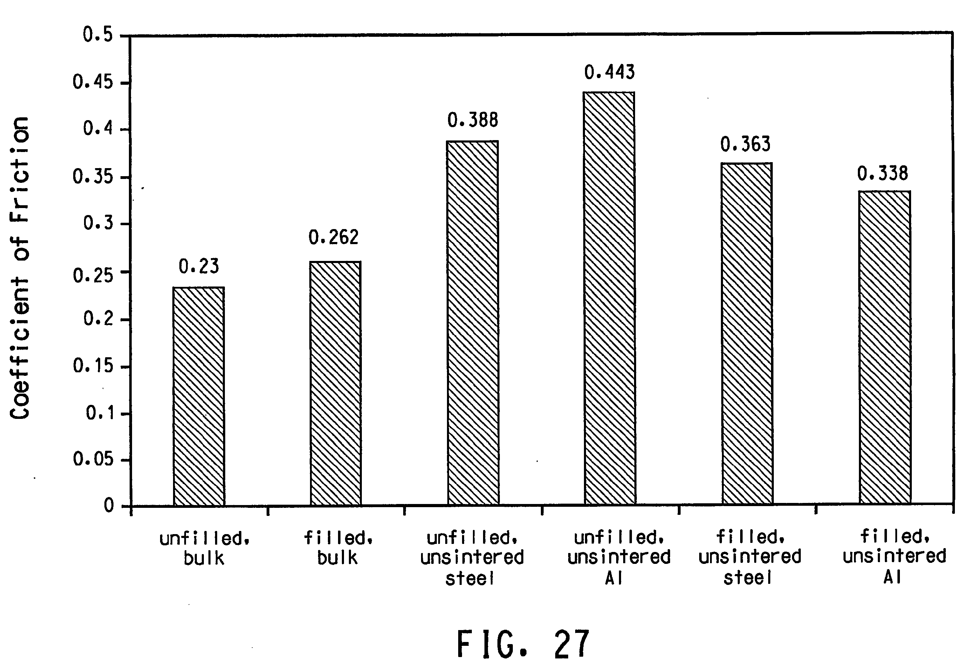

Figures 26 and 27 show no obvious difference according to the theory between the COF's for unsintered coatings sprayed from unfilled and filled material onto steel and aluminum substrates.

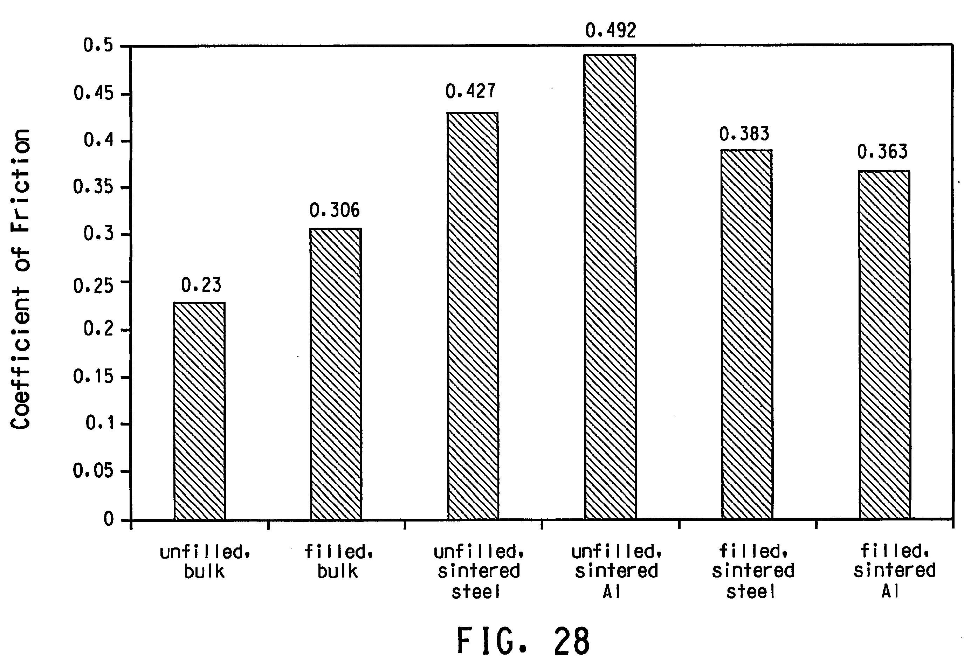

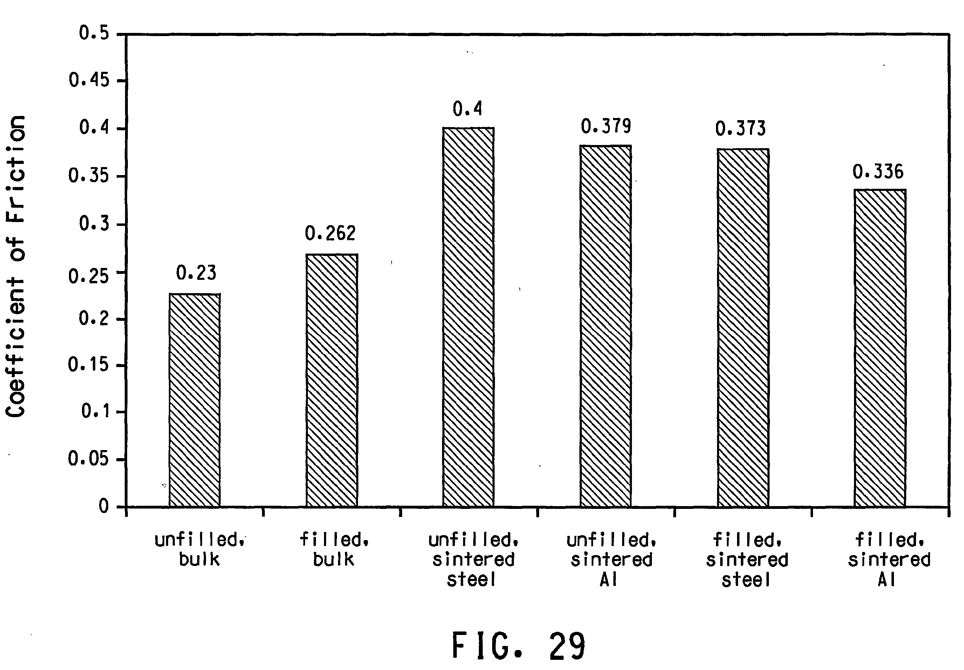

Figures 28 and 29 compare the coefficients of friction for sintered coatings on steel and aluminum substrate. Since the results for the unfilled material varied greatly it was again difficult to evaluate a trend. The filled material exhibited a lower COF on aluminum than on steel (0.349 to 0.378). Again, a possible explanation is the combination of factors like improved cohesion due to increased heat transfer and maybe degree of crosslinking. On the aluminum substrate the sintered coatings showed less resistance and exhibited a lower coefficient of friction than on steel. This could also be confirmed by the results for the wear tack area where the aluminum substrate coatings showed higher wear rates, which was equal to a lower degree of cohesion and the factors mentioned above. Again the sinter process did not equalize the difference in cohesion between steel and aluminum substrates.

The experiments demonstrated, that Polyimides can be sprayed by HVOF and adherent coatings can be produced. Wear testing showed the beneficial effects of the sintering process. A wide range of tests was performed to characterize the coatings' adhesion, cohesion, hardness and sliding wear performance.

The Tape Test showed that sintering enhanced adhesion and cohesion whereas substrate and filler had no influence. Concerning coating hardness the Pencil Test gave information about the hardness increasing effect of sintering and the fact, that coatings on steel exhibit a higher hardness than on aluminum. Scratch testing showed the cohesion enhancing effect of sintering resulting in a lower scratch depth independent from substrate and filler. The potential wear mechanism was described through a model for the effects of different factors such as filler and substrate. The graphite filler should have a lubricating and bond reducing effect resulting in lower coefficients of friction and higher wear rates. Due to the higher thermal conductivity coatings on aluminum substrates should exhibit less cohesion and thus less resistance during wear. Sintering should increase coating cohesion and equalize differences between filled and unfilled materials and coatings on steel and aluminum substrates.

Concerning wear track area some points of the model could be confirmed. The filled material showed higher wear rates due to less cohesion because of the filler. Coatings on aluminum exhibited higher wear rates than the ones on steel. Sintering equalized the difference in wear performance between filled and unfilled material on steel but-not on aluminum. Also the difference between coatings on steel and aluminum, as assumed in the model, were not equalized.

Regarding coefficient of friction, the experiments showed that the filled material exhibited a lower coefficient of friction than the unfilled one. In addition to the wear rates the results for the COF could support the assumption that coatings on aluminum exhibit less wear resistance and thus lower COF's than the ones on steel due to reduced cohesion. Again an equalizing effect of sintering between coatings on steel and aluminum substrates could not be noticed. It is therefore, apparent that there has been provided in accordance with the present invention, a method of spray coating non-meltable polymers using HVOF that fully satisfies the aims and advantages hereinbefore set forth. While this invention has been described in conjunction with a specific embodiment thereof, it is evident that many alternatives, modifications, and variations will be apparent to those skilled in the art. Accordingly, it is intended to embrace all such alternatives, modifications and variations that fall within the spirit and broad scope of the appended claims.

## Claims

1. An article being spray coated with one or more exclusively non-melting polymers wherein said article is spray coated using a process comprising a hig velocity oxygen fuel (HVOF) and spraying an HVOF stream containing said one or more non-melting polymers from an elongated nozzle downstream from and in flow communication with said HVOF, said elongated nozzle comprising a cooling fluid, circulating externally around said barrel having a central bore with an inlet opening and an outlet opening, said one or more non-melting polymers being fed into said HVOF stream at a point within said elongated nozzle downstream from said inlet opening to coat said article with the one or more non-melting polymers.

2. An article of claim 1, wherein the resistance to degradation from exposure to a corrosive environment of the article is enhanced by the presence of the coating.

3. The article according to **claim 1,** wherein said one or more non-melting polymers comprise one or more polyphenylenes, polyether sulfones, polyphenylene sulfides, polyimidothioethers, polyoxamides, polyimines, polysulfonamides, polyimides, polysulfonimides, polyimidines, polypyrazoles, polyisoxazoles, polybenzoxazoles, polybenzimidazoles, polythiazoles, polybenzothiazoles, polyoxadiazoles, polytriazoles, polytriazolines, polytetrazoles, polyquinolines, polyanthrazolines, polypyrazines, polyquinoxalines, polyquinoxalones, polyquinazolones, polytriazines, polytetrazines, polythiazones, polypyrrones, polyphenanthrolines, polycarbosilanes, and polysiloxanes.

4. An article according to **claim 1**, comprising a smooth surface having less than or equal to 250 micrometers of roughness prior to spray coating.

5. An article according to **claim 4**, further comprising a roughened smooth surface prior to applying a spray coating thereto.

6. An article according to **claim 1 or 5**, wherein the article being spray coated with the at least one non-melting polymer is post-cured wherein being post-cured comprises the spray coating of the at least one non-meltable polymer being sintered onto said article.

7. An article according to **claim 6,** wherein being sintered comprises heating the at least one non-melting polymer spray coated onto said article, wherein the heating does not exceed a maximum temperature of 450° C in an enclosure having an atmosphere devoid of oxygen.

8. An article according to **claim 1**, wherein the article is a chamber.

9. An article according to **8**, wherein the chamber having a chamber with components, said components comprising one or more of an upper electrode, lower electrode, interior wall, side wall and wafer stage, and the chamber being exposed to a corrosive environment wherein at least one or more of the components are spray coated with said non-melting polymer.

10. An article according to **claim 9**, wherein the chamber is a plasma etching chamber containing gas which has been excited to a plasma state.

11. An article according to **claim 1**, wherein said article being spray coated with said one or more non-melting polymers reduce friction and wear rate of the spray coated article.

12. An article according to **claim 1**, wherein said spray coated article improves insulation of the article to reduce heat transfer via the article.

13. An article according to **claim 1**, wherein said spray coated article improves the insulation of the article to reduce electrical transfer through the article.

14. An article according to **claim 1**, wherein said spray coated article improves the conduction of the article to increase the electrical transfer through the article.

## Patentansprüche

1. Artikel, der mit ein oder mehreren ausschließlich nichtschmelzenden Polymeren sprühbeschichtet wird, wobei der Artikel unter Einsatz eines Verfahrens, das einen Hochgeschwindigkeits-Sauerstoffbrennstoff (high velocity oxygen fuel, HVOF) umfasst und bei dem ein HVOF-Strom gesprüht wird, der ein oder mehrere nichtschmelzende Polymere aus einer länglichen Düse in Stromrichtung hinter dem und in Fluidkommunikation mit dem HVOF enthält, sprühbeschichtet wird, wobei die längliche Düse, die ein Kühlfluid umfasst, das außen um den Zylinder zirkuliert, eine mittige Bohrung mit einer Einlassöffnung und einer Auslassöffnung aufweist, wobei ein oder mehrere nichtschmelzende Polymere dem HVOF-Strom an einer Stelle in der länglichen Düse in Stromrichtung hinter der Einlassöffnung zugeführt werden, um den Artikel mit ein oder mehreren nichtschmelzenden Polymeren zu beschichten.

2. Artikel nach Anspruch 1, wobei die Beständigkeit des Artikels gegen Degradation aufgrund der Exposition in einer korrosiven Umgebung durch das Vorhandensein der Beschichtung erhöht wird.

3. Artikel nach Anspruch 1, wobei ein oder mehrere nichtschmelzende Polymere ein oder mehrere Polyphenylene, Polyethersulfone, Polyphenylensulfide, Polyimidothioether, Polyoxamide, Polyimine, Polysulfonamide, Polyimidine, Polysulfonimide, Polyimidine, Polypyrazole, Polyisoxazole, Polybenzoxazole, Polyberizimidazole, Polythiazole, Polybenzothiaxole, Polyoxadiazole, Polytriazole, Polytriazoline, Polytetrazole, Polychinoline, Polyanthrazoline, Polypyrazine, Polychinoxaline, Polychinoxalone, Polychinazolone, Polytriazine, Polytetrazine, Polythiazone, Polypyrrone, Polyphenanthroline, Polycarbosilane und Polysiloxane umfassen.

4. Artikel nach Anspruch 1, der eine glatte Oberfläche umfasst, die vor dem Sprühbeschichten eine Rauigkeit von 250 Mikrometer oder weniger aufweist.

5. Artikel nach Anspruch 4, der außerdem eine aufgeraute glatte Oberfläche umfasst, bevor auf demselben eine Sprühbeschichtung aufgetragen wird.

6. Artikel nach Anspruch 1 oder 5, wobei der mit mindestens einem nichtschmelzenden Polymer sprühbeschichtete Artikel nachgehärtet wird und das Nachhärten das Sprühbeschichten von mindestens einem nichtschmelzenden Polymer umfasst, das auf den Artikel gesintert wurde.

7. Artikel nach Anspruch 6, wobei der durchgeführte Prozess des Sinterns das Aufheizen von mindestens einem nichtschmelzenden Polymer umfasst, das auf den Artikel durch Sprühbeschichten aufgetragen wurde, wobei beim Aufheizen in einem gekapselten Raum mit einer Atmosphäre ohne Sauerstoff eine maximale Temperatur von 450 °C nicht überschritten wird.

8. Artikel nach Anspruch 1, wobei der Artikel eine Kammer ist.

9. Artikel nach Anspruch 8, wobei die Kammer eine Kammer mit Komponenten aufweist, wobei die Komponenten ein oder mehrere obere Elektroden, untere Elektroden, Innenwände, Seitenwände und Wafertische sowie die Kammer umfassen, die einer korrosiven Umgebung ausgesetzt ist, wobei mindestens eine oder mehrere der Komponenten mit dem nichtschmelzenden Polymer sprühbeschichtet werden.

10. Artikel nach Anspruch 9, wobei die Kammer eine Plasmaätzkammer ist, die Gas enthält, das in einen Plasmazustand angeregt wurde.

11. Artikel nach Anspruch 1, wobei der mit ein oder mehreren nichtschmelzenden Polymeren sprühbeschichtete Artikel die Reib- und Verschleißrate des sprühbeschichteten Artikels verringert.

12. Artikel nach Anspruch 1, wobei der sprühbeschichtete Artikel die Isolation des Artikels verbessert, um die Wärmeübertragung durch den Artikel hindurch zu verringern.

13. Artikel nach Anspruch 1, wobei der sprühbeschichtete Artikel die Isolation des Artikels verbessert, um die elektrische Übertragung durch den Artikel hindurch zu verringern.

14. Artikel nach Anspruch 1, wobei der sprühbeschichtete Artikel die Leitfähigkeit des Artikels verbessert, um die elektrische Übertragung durch den Artikel hindurch zu erhöhen.

## Revendications

1. Article qui est revêtu par pulvérisation avec un (des) polymère(s) exclusivement non fusible(s), dans lequel ledit article est revêtu par pulvérisation en utilisant un procédé comprenant un mélange de combustible et d'oxygène à haute vitesse (HVOF) et en pulvérisant le courant de HVOF contenant ledit un ou plusieurs polymère(s) non fusible(s) à partir d'une buse allongée se trouvant en aval et en communication d'écoulement avec ledit HVOF, ladite buse allongée comprenant un fluide de refroidissement, circulant extérieurement autour dudit cylindre possédant un alésage central avec une ouverture d'entrée et une ouverture de sortie, ledit un ou plusieurs polymère(s) non fusible(s) étant introduit dans ledit courant de HVOF en un point à l'intérieur de ladite buse allongée en aval de ladite ouverture d'entrée pour revêtir ledit article avec le un ou plusieurs polymère(s) non fusible(s).

2. Article selon la revendication 1, dans lequel la résistance de l'article à la dégradation provenant de l'exposition à un environnement corrosif est améliorée par la présence du revêtement.

3. Article selon la revendication 1, dans lequel ledit un ou plusieurs polymère(s) non fusible(s) comprennent un ou plusieurs polyphénylènes, polyéthersulfones, poly(sulfure de phénylène), polyimidothioéthers, polyoxamides, polyimines, polysulfonamides, polyimides, polysulfonimides, polyimidines, polypyrazoles, polyisoxazoles, polybenzoxazoles, polybenzimidazoles, polythiazoles, polybenzothiazoles, polyoxadiazoles, polytriazoles, polytriazolines, polytétrazoles, polyquinoléines, polyanthrazolines, polypyrazines, polyquinoxalines, polyquinoxalones, polyquinazolones, polytriazines, polytétrazines, polythiazones, polypyrrones, polyphénanthrolines, polycarbosilanes, et polysiloxanes.

4. Article selon la revendication 1, comprenant une surface lisse possédant une rugosité inférieure ou égale à 250 micromètres avant le revêtement par pulvérisation.

5. Article selon la revendication 4, comprenant en outre une surface lisse rendue rugueuse avant d'appliquer un revêtement par pulvérisation sur celle-ci.

6. Article selon la revendication 1 ou 5, dans lequel l'article qui est revêtu par pulvérisation avec le au moins un polymère non fusible est post-cuit dans lequel la post-cuisson comprend le frittage sur ledit article du revêtement obtenu par pulvérisation du au moins un polymère non fusible.

7. Article selon la revendication 6, dans lequel le frittage comprend le chauffage du au moins un polymère non fusible revêtu par pulvérisation sur ledit article, dans lequel le chauffage ne dépasse pas une température maximale de 450°C dans une enceinte possédant une atmosphère dépourvue d'oxygène.

8. Article selon la revendication 1, dans lequel l'article est une chambre.

9. Article selon la revendication 8, dans lequel la chambre possédant une chambre avec des composants, lesdits composants comprenant un ou plusieurs éléments parmi une électrode supérieure, une électrode inférieure, une paroi intérieure, une paroi latérale et une platine de support pour tranche, et la chambre étant exposée à un environnement corrosif dans lequel au moins un ou plusieurs des composants sont revêtus par pulvérisation avec ledit polymère non fusible.

10. Article selon la revendication 9, dans lequel la chambre est une chambre de gravure par plasma contenant un gaz qui a été excité jusqu'à un état de plasma.

11. Article selon la revendication 1, dans lequel le fait de revêtir par pulvérisation ledit article avec ledit un ou plusieurs polymère(s) non fusible(s) réduit la friction et le taux d'usure de l'article revêtu par pulvérisation.

12. Article selon la revendication 1, dans lequel ledit article revêtu par pulvérisation améliore l'isolation de l'article pour réduire le transfert de chaleur à travers l'article.

13. Article selon la revendication 1, dans lequel ledit article revêtu par pulvérisation améliore l'isolation de l'article pour réduire le transfert d'électricité à travers l'article.

14. Article selon la revendication 1, dans lequel ledit article revêtu par pulvérisation améliore la conduction de l'article pour augmenter le transfert d'électricité à travers l'article.
